(19) Europäisches Patentamt
European Patent Office
Office européen des brevets

(11) **EP 4 541 508 A1**

(12) **EUROPEAN PATENT APPLICATION**
published in accordance with Art. 153(4) EPC

(43) Date of publication:
**23.04.2025 Bulletin 2025/17**

(51) International Patent Classification (IPC):
**B23Q 17/24** $^{(2006.01)}$     **B23Q 3/155** $^{(2006.01)}$
**B23Q 17/09** $^{(2006.01)}$

(21) Application number: **23823618.6**

(22) Date of filing: **22.05.2023**

(52) Cooperative Patent Classification (CPC):
**B23Q 3/155; B23Q 17/09; B23Q 17/24**

(86) International application number:
**PCT/JP2023/018908**

(87) International publication number:
**WO 2023/243317 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.06.2022 JP 2022095929**

(71) Applicant: **DMG Mori Co., Ltd.
Yamatokoriyama-shi, Nara 639-1160 (JP)**

(72) Inventors:
• **SHIGEKANE, Akito
Yamatokoriyama-shi, Nara 639-1160 (JP)**
• **MATSUHIRA, Masaya
Yamatokoriyama-shi, Nara 639-1160 (JP)**

(74) Representative: **Isarpatent
Patent- und Rechtsanwälte
Barth Hassa Peckmann & Partner mbB
Friedrichstraße 31
80801 München (DE)**

(54) **IMAGING DEVICE, TOOL STORAGE DEVICE, AND MACHINE TOOL**

(57)     An imaging device includes: a laser output unit configured to output a plurality of laser beams to be incident on a tool in a direction intersecting a longitudinal direction of the tool; a driving mechanism configured to drive the laser output unit to perform scanning with the plurality of laser beams in the longitudinal direction or a short direction of the tool; and an imaging unit configured to image the tool or a projection image of the tool in a state in which an exposure time in a single imaging is set to correspond to a movement time taken by the driving mechanism to move the laser output unit a predetermined distance.

FIG.11

## Description

Technical Field

The present invention relates to an imaging technology for imaging a tool.

Background Art

Examples of machine tools include a turning center in which a tool is moved relative to a rotating workpiece, a machining center in which a rotating tool is moved relative to a workpiece, and a combined machine having combined functions of a turning center and a machining center. A machine tool includes a tool changer called an automatic tool changer (ATC), and machines workpieces into desired shapes by changing tools among a plurality of kinds of tools in processes of machining. An ATC changes tools between a tool storage part (a magazine, etc.) and a tool holding part (a spindle, etc.).

In such a machine tool, when a tool after being used has an abnormality such as a fracture, a breakage, or chips entangled therearound, the tool (hereinafter also referred to as a "faulty tool") cannot be used in this state for next machining. Thus, a technology providing an imaging device that images a blade shape of a tool before and after being used to determine whether or not the tool is a faulty tool on the basis of the images before and after use has been proposed (Patent Literature 1).

In a tool test, an imaging target portion (from a blade base to a blade edge, for example) to be imaged of a tool is irradiated and the tool is imaged by an imaging unit (camera). The contour (outline) of the tool is then determined on the basis of a taken image. When a normal contour shape cannot be obtained, the tool can be determined to be a faulty tool.

The accuracy of such a tool test depends on the contrast of taken images. Therefore, an imaging target portion of a tool needs to be uniformly irradiated. Tools stored in a tool storage part, however, have various sizes, and it is difficult to uniformly irradiate a tool that is too large relative to an irradiation area. Using a large illumination device for a large tool is, however, disadvantageous in terms of cost.

An imaging device that performs imaging of a tool a plurality of times while moving an illumination unit in a longitudinal direction of the tool and combines the resulting images to obtain a whole image of an imaging target portion has therefore been proposed (Patent Literature 2). Such an imaging device enables acquisition of an image of an imaging target portion, regardless of the tool size, for a tool test.

Related Art List

Patent Literatures

Patent Literature 1: JP 2015-131357 A
Patent Literature 2: JP 6991375 B1

Summary

Technical Problem

If such an imaging device is adopted, however, the movement of the illumination device needs to be stopped each time imaging is performed. This is because high-contrast images may not be consecutively obtained if the illumination device moves in a state in which a shutter of a camera is opened, that is, during exposure time. Furthermore, lighting such as LEDs that are typical for an illumination unit has a large irradiation angle. Thus, when the irradiation position relative to an edge portion of a tool that is not parallel to an axis of movement of the illumination unit is changed, the position of a projected shadow varies. This results in a limit to obtain a highly accurate and high contrast tool contour shape. There is therefore room for improvement in the efficiency of imaging.

Solution to Problem

An aspect of the present invention is an imaging device. The imaging device includes: a laser output unit configured to output a plurality of laser beams to be incident on a tool in a direction intersecting a longitudinal direction of the tool; a driving mechanism configured to drive the laser output unit to perform scanning with the plurality of laser beams in the longitudinal direction or a short direction of the tool; and an imaging unit configured to image the tool or a projection image of the tool in a state in which an exposure time in a single imaging is set to correspond to a movement time taken by the driving mechanism to move the laser output unit a predetermined distance.

Another aspect of the present invention is also an imaging device. The imaging device includes: a laser output unit configured to output a plurality of laser beams to be incident on a tool in a direction intersecting a longitudinal direction of the tool; a driving mechanism configured to drive the laser output unit to perform scanning with the plurality of laser beams in the longitudinal direction or a short direction of the tool; and an imaging unit configured to move the laser output unit a predetermined distance and perform a single imaging of the tool or a projection image of the tool. A width of an image obtained by the single imaging performed by the imaging unit is larger than a width of laser beam irradiation in a moving direction of the laser output unit.

Another aspect of the present invention is tool storage equipment. The tool storage equipment includes: a tool storage for storing tools; a tool support for supporting a tool taken from the tool storage; a laser output unit configured to output a plurality of laser beams to be incident on the tool, supported by the tool support, in a direction intersecting a longitudinal direction of the tool; a driving mechanism configured to drive the laser output unit to perform scanning with the plurality of laser beams in the longitudinal direction or a short direction of the tool; and an imaging unit configured to image the tool or a projection image of the tool in a state in which an exposure time in a single imaging is set to correspond to a movement time taken by the driving mechanism to move the laser output unit a predetermined distance.

Still another aspect of the present invention is a machine tool. The machine tool includes: a tool support for supporting a tool; a laser output unit configured to output a plurality of laser beams to be incident on the tool, supported by the tool support, in a direction intersecting a longitudinal direction of the tool; a driving mechanism configured to drive the laser output unit to perform scanning with the plurality of laser beams in the longitudinal direction or a short direction of the tool; and an imaging unit configured to image the tool or a projection image of the tool in a state in which an exposure time in a single imaging is set to correspond to a movement time taken by the driving mechanism to move the laser output unit a predetermined distance.

Advantageous Effects of Invention

The present invention provides an imaging device capable of efficiently acquiring high-contrast tool images regardless of the tool length.

Brief Description of Drawings

FIG. 1 is a perspective view of an external appearance of a machine tool according to an embodiment.
FIG. 2 is a side view of an internal structure of tool storage equipment 4.
FIG. 3 is a perspective view schematically illustrating a structure inside a storage chamber.
FIG. 4 is a front view schematically illustrating a structure around a boundary between the storage chamber and a machining chamber.
FIG. 5 is a hardware configuration diagram of the machine tool and an image processing device.
FIG. 6 is a functional block diagram of the image processing device.
FIG. 7 is a diagram schematically illustrating a method for imaging a subject tool.
FIG. 8 is a diagram schematically illustrating the method for imaging a subject tool.
FIGS. 9A to 9C are diagrams schematically illustrating the method for imaging a subject tool.
FIGS. 10A to 10C are diagrams schematically illustrating the method for imaging a subject tool.
FIG. 11 is a diagram schematically illustrating the method for imaging a subject tool.
FIGS. 12A to 12E show examples of actual taken images and image processing.
FIGS. 13A and 13B show examples of actual taken images and image processing.
FIG. 14 is a flowchart illustrating a process of obtaining tool shape data.
FIG. 15 is a flowchart illustrating a tool testing process.
FIGS. 16A and 16B schematically illustrate a difference in projected image depending on the type of illumination.
FIG. 17 is a diagram schematically illustrating a method for imaging a subject tool according to a first modification.
FIG. 18 is a diagram schematically illustrating a method for imaging a subject tool according to a second modification.
FIG. 19 is a diagram illustrating a specific example of imaging and image processing according to a third modification.
FIG. 20 is a diagram schematically illustrating a method for imaging a subject tool according to a modification.
FIG. 21 is a diagram illustrating processes of an image processing method according to a modification.
FIG. 22 is a diagram schematically illustrating an example of one image acquired in an image acquisition process.
FIGS. 23A and 23B are diagrams illustrating a method for detecting a breakage of a tool.
FIGS. 24A and 24B are diagrams illustrating a method for detecting chips adhered to a tool.

Description of Embodiments

An embodiment of the present disclosure will now be described with reference to the drawings. A machine tool according to the embodiment is configured as a machining center for machining workpieces into desired shapes by appropriately changing tools.

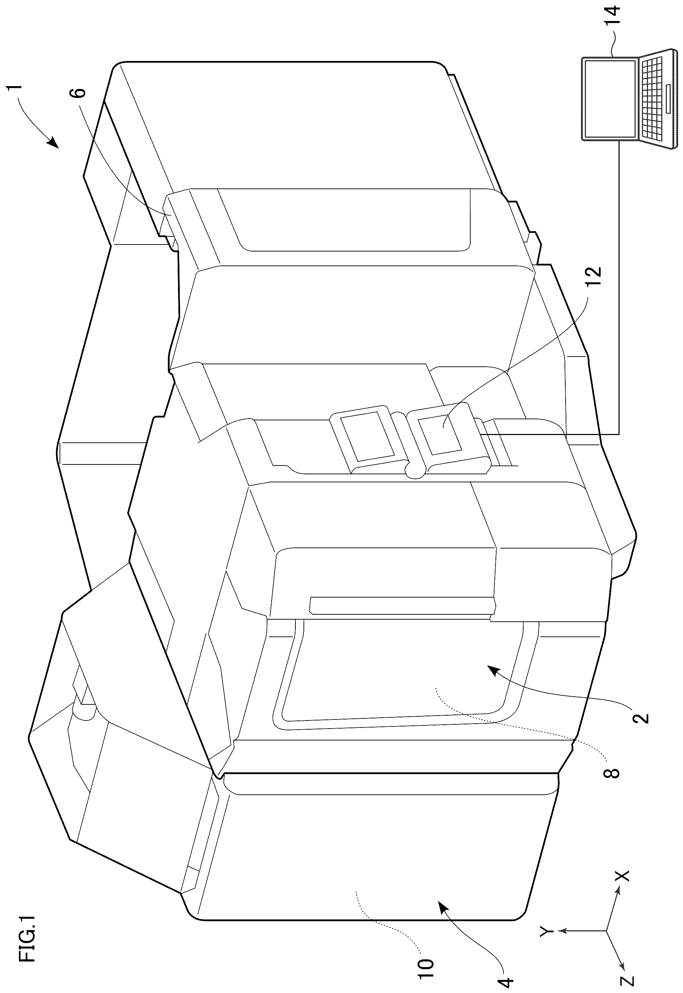

FIG. 1 is a perspective view of an external appearance of a machine tool according to an embodiment. The front-back direction, the left-right direction, and the up-down direction of the machine tool 1 as viewed from the front will be referred to as a Z-axis direction, an X-axis direction, and a Y-axis direction, respectively.

The machine tool 1 includes machining equipment 2 and tool storage equipment 4. A cover 6 (equipment housing) is provided to cover the equipment. The cover 6 contains a machining chamber 8 on the right side and a storage chamber 10 on the left side in front view. In the machining chamber 8, machining is performed by the machining equipment 2. In the storage chamber 10, a plurality of tools are stored by the tool storage equipment 4 and tool replacement is performed by an ATC, which is not illustrated (which will be described in detail later).

An operation panel 12 is located on a right side face of the cover 6. An image processing device 14 is connected to the operation panel 12. A user can remotely monitor a working status of the machine tool 1 by using the image processing device 14. The image processing device 14 may be a common laptop personal computer (PC) or tablet computer. In a modification, the image processing device may be a device inside the machining chamber 8.

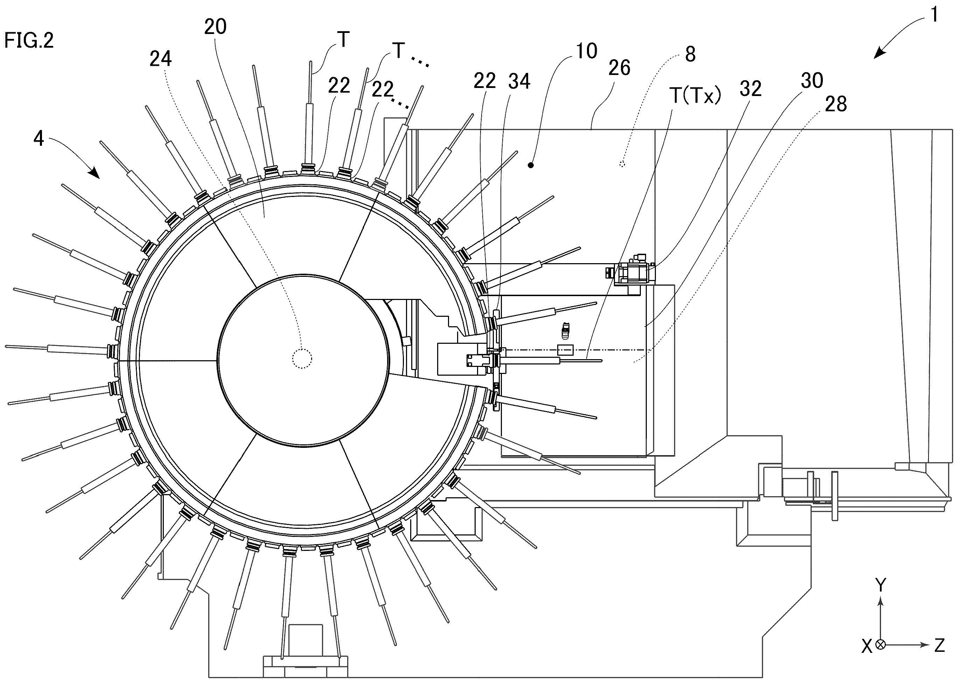

FIG. 2 is a side view of an internal configuration of the tool storage equipment 4. FIG. 2 corresponds to a left side view of the machine tool 1, and illustrates a state in which a left side face of the cover 6 is removed for convenience of explanation. In addition, a magazine (which will be described later) is illustrated in a partially cutout manner.

The tool storage equipment 4 includes a disk type magazine 20. A plurality of pots 22 are arranged along an outer circumferential face of the magazine 20, and each pot 22 can accommodate a tool T. The pots 22 each coaxially hold a tool T, and thus a plurality of tools are held radially around a rotating shaft 24 of the magazine 20. In a modification, a magazine of a chain type or other types may be used.

The magazine 20 turns around the rotating shaft 24, and horizontally supports a tool T for replacement at a front end position thereof (a right end position in FIG. 2). Specifically, the pots 22 of the magazine 20 each function as a "tool support" that supports a tool T for replacement (also referred to as a "subject tool Tx") in the storage chamber 10 in a standby state.

A partition 26 separating the storage chamber 10 from the machining chamber 8 has an opening 28, and a shutter 30 for opening and closing the opening 28 is provided. In addition, an opening/shutting mechanism 32 for moving the shutter 30 along the longitudinal direction of a subject tool Tx to open and close the opening 28 is provided. An ATC 34 is located in the storage chamber 10. The ATC 34 replaces a tool T held by a tool spindle (not illustrated) in the machining chamber 8 with a tool T held in a standby state in the storage chamber 10. Tool replacement is performed in a state in which the shutter 30 is open.

A subject tool Tx is horizontally supported as a tool for replacement in the storage chamber 10. The subject tool Tx can be a pre-use tool Tp (which will be described later) just before tool replacement, and a post-use tool Tu (which will be described later) just after tool replacement. In the present embodiment, an image of a tool as a pre-use tool Tp and an image of the tool as a post-use tool Tu are taken. The condition of the post-use tool Tu (whether the post-use tool Tu is a faulty tool, etc.) is determined on the basis of comparison between the image of the pre-use tool Tp and the image of the post-use tool Tu.

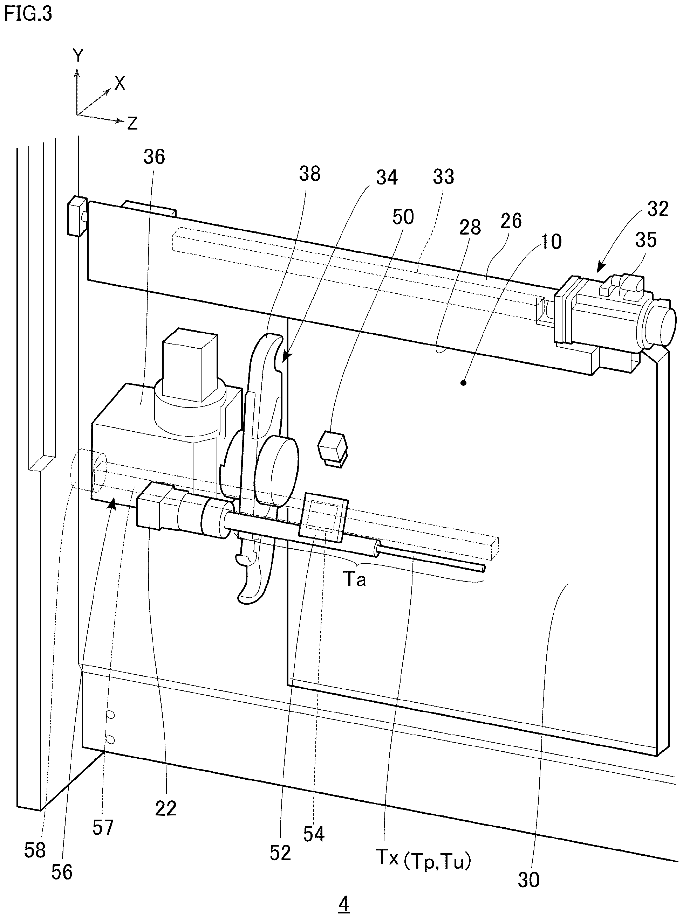

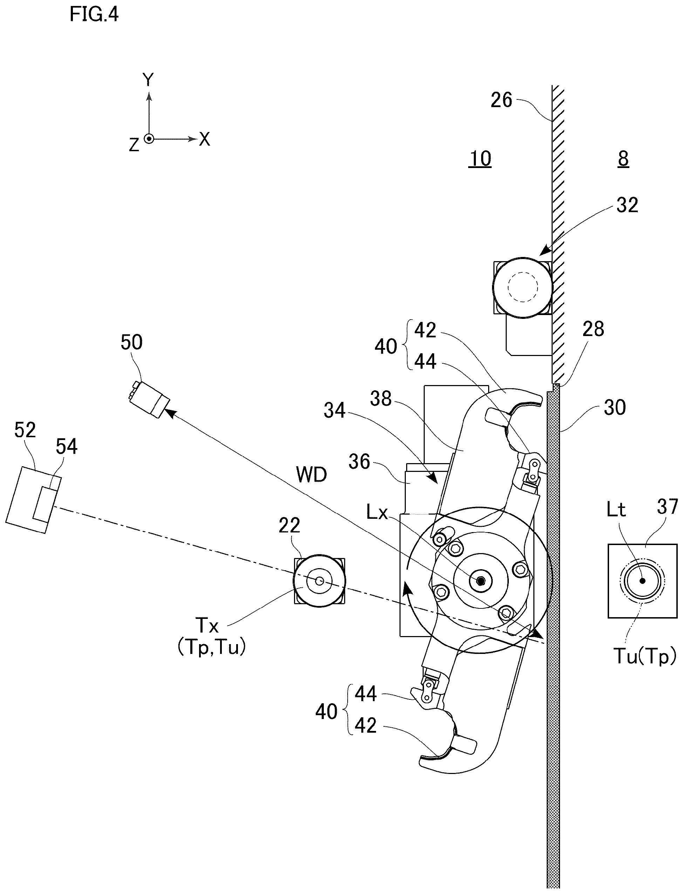

FIG. 3 is a perspective view schematically illustrating a structure in the storage chamber 10. FIG. 4 is a front view schematically illustrating a structure around the boundary between the storage chamber 10 and the machining chamber 8.

As illustrated in FIG. 3, the subject tool Tx is horizontally supported in the storage chamber 10. The shutter 30 is driven in the longitudinal direction of the subject tool Tx by the opening/shutting mechanism 32, to open and close the opening 28. Note that the "longitudinal direction" of the subject tool Tx is a direction along the axis of the pot 22 that supports the subject tool Tx in the storage chamber 10 and corresponds to the "Z-axis direction". A "short direction" of the subject tool Tx is a direction perpendicular to the longitudinal direction, and can be the "X-axis direction" or the "Y-axis direction". The opening/shutting mechanism 32 includes a feed screw mechanism 33 and a servomotor 35 for driving the feed screw mechanism 33.

As also illustrated in FIG. 4, the ATC 34 is located in a space between the subject tool Tx and the shutter 30. The ATC 34 includes a main unit 36 including a motor, and an arm 38 mounted on a rotating shaft of the motor. The arm 38 has a symmetrical shape with respect to the rotating shaft, and includes grip parts 40 at respective ends thereof. The grip parts 40 each include a fixed jaw 42 and a movable jaw 44. The grasping movement of each grip part 40 is achieved by driving the movable jaw 44.

The ATC 34 includes a translation mechanism for moving the arm 38 in the axial direction, and a rotation mechanism for rotating the arm 38 about the axis. The motor includes a first motor for driving the translation mechanism, and a second motor for driving the rotation mechanism. Because such mechanisms themselves are known, detailed description thereof is omitted herein.

While the ATC 34 is not operating, the ATC 34 is in a state in which the longitudinal direction of the arm 38 is in the up-down direction as illustrated in FIG. 4. The ATC 34 is thus accommodated in the storage chamber 10 with the shutter 30 closed. While the ATC 34 is operating, a pre-use tool Tp is in a standby state on one side (on the storage chamber 10 side) of the axis of the arm 38, and a post-use tool Tu is in a standby state on the other side (on the machining chamber 8 side) thereof. In this state, the shutter 30 is opened.

When the ATC 34 operates, the arm 38 turns, and the pair of grip parts 40 grasp the pre-use tool Tp and the post-use tool Tu. At this point, the arm 38 is temporarily located across the opening 28. When the translation mechanism and the rotation mechanism are then driven, tools are detached from and attached to the pot 22 and the tool spindle 37, and tool replacement is thus performed. Because such operation of the ATC is known, detailed explanation thereof is omitted herein.

An imaging unit 50 and a light source 52 are located slightly above a position at which the subject tool Tx is held. The imaging unit 50 is a camera including an image sensor (image pickup device) such as a complementary metal oxide semiconductor (CMOS) or a charge-coupled device (CCD). The imaging unit 50 has a resolution of about one million pixels (1224×1024), and is capable of capturing a maximum of 80 images per second.

The light source 52 includes a laser output unit 54 that outputs a highly directional line laser beam (hereinafter also simply referred to as "laser beam") (details of which will be described later). The light source 52 is located opposite the shutter 30 with respect to the subject tool Tx supported by the pot 22. The shutter 30 functions as a "projection part" onto which the subject tool Tx is projected by a laser beam emitted by the light source 52. The imaging unit 50 is located opposite the shutter 30 with respect to the subject tool Tx, and takes a projection image of the subject tool Tx to be projected onto the shutter 30.

The ATC 34 is located between the subject tool Tx supported by the pot 22 and the shutter 30. Thus, the light source 52 is positioned so that the projection of the subject tool Tx and the projection of the ATC 34 made by irradiation of laser beams do not overlap with each other. In the embodiment, the light source 52 is located at an oblique angle slightly above the subject tool Tx. In addition, the imaging unit 50 is also positioned so that a projection image of the subject tool Tx and an image of the subject tool Tx itself do not overlap with each other in the angle of view of the imaging unit 50. In the embodiment, the imaging unit 50 is located above the light source 52 and the subject tool Tx.

The distance (working distance: hereinafter also referred to as "WD") between the imaging unit 50 and the shutter 30 is set so that the projection of an imaging target portion Ta of the subject tool Tx (see FIG. 3) can be within a screen. Note that the imaging target portion Ta refers to a portion that needs to be tested (also referred to as a "portion to be tested") to determine whether or not the subject tool Tx is a faulty tool, and is set in advance. In the embodiment, the imaging target portion Ta is set as a portion at least from a blade base end to a blade edge of the subject tool Tx. In a modification, the imaging target portion Ta may be a portion from a base end supported by the pot 22 to the blade edge of the subject tool Tx.

The description refers back to FIG. 3, in which a light source driving mechanism 56 for moving the light source 52 in the longitudinal direction of the subject tool Tx is provided in the storage chamber 10. The light source driving mechanism 56 includes a feed mechanism 57 and a servomotor 58 for driving the feed mechanism 57. The feed mechanism 57 is a feed screw mechanism including a linear guide in the embodiment, or may be other feed mechanisms such as an air cylinder. The light source driving mechanism 56 drives the light source 52 (or the laser output unit 54) to scan the subject tool Tx in the longitudinal direction with a line laser beam (details of which will be described later).

As illustrated in FIG. 4, the rotation axis Lt of the tool spindle 37, the rotation axis Lx of the ATC 34, the moving direction of the shutter 30, the moving direction of the light source 52, and the longitudinal direction of the subject tool Tx at a standby position for tool replacement are designed to be parallel to each other (along the Z direction).

Although not illustrated in FIGS. 3 and 4, it is needless to say that such structures as the main unit 36 of the ATC 34, the opening/shutting mechanism 32, the light source driving mechanism 56, and the imaging unit 50 are stably fixed to such a structure as a wall surface or a beam in the storage chamber 10.

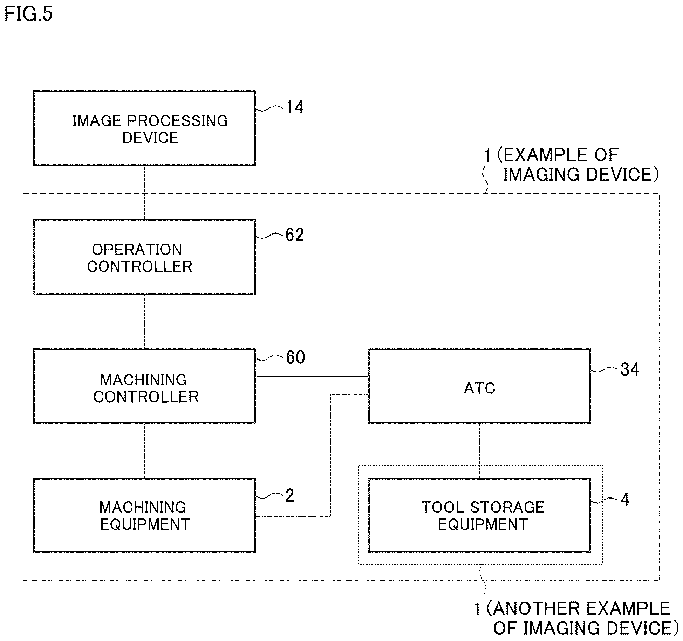

FIG. 5 is a hardware configuration diagram of the machine tool 1 and the image processing device 14.

The machine tool 1 includes a machining controller 60 and an operation controller 62 in addition to the machining equipment 2, the tool storage equipment 4, and the ATC 34 described above. The machining controller 60 functions as a numerical controller that outputs control signals to the machining equipment 2 in accordance with machining programs. The machining equipment 2 drives the tool spindle 37 to machine a workpiece in accordance with instructions from the machining controller 60. The light source 52 and the imaging unit 50 described above constitute an imaging device in the machine tool 1. The image processing device 14 processes images taken by the imaging unit 50.

The operation controller 62 includes the operation panel 12, and controls the machining controller 60. The ATC 34 takes out a tool from the tool storage equipment 4 and replaces a post-use tool Tu held on the tool spindle with the pre-use tool Tp taken out from the tool storage equipment 4 in accordance with a replacement instruction from the machining controller 60.

The image processing device 14 mainly performs image processing such as recognition of tool shapes. As described above, the image processing device 14 may be part of the operation controller 62.

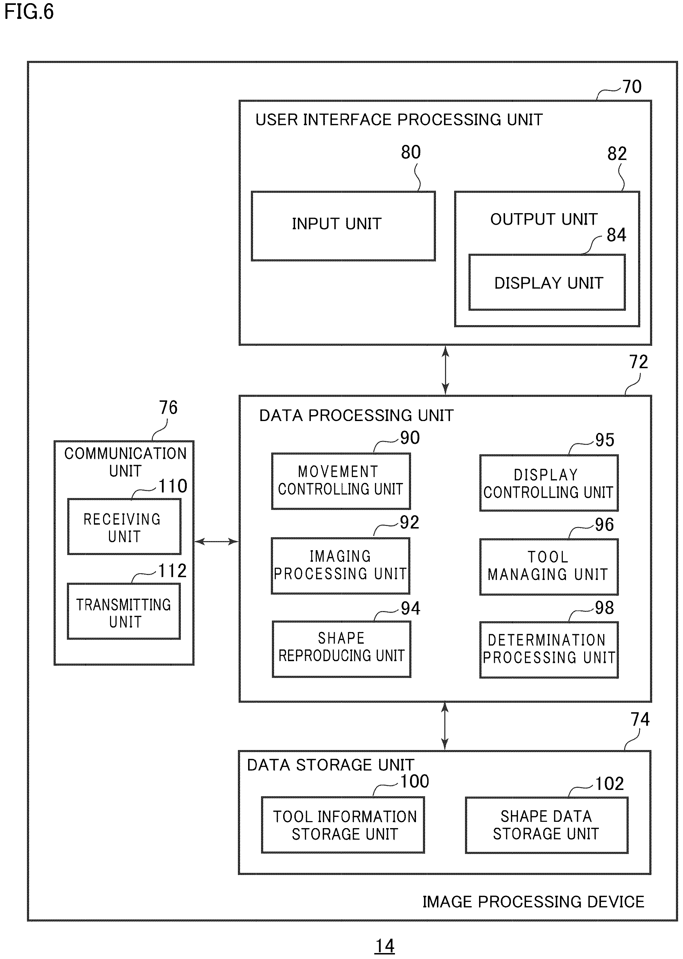

FIG. 6 is a functional block diagram of the image processing device 14.

The components of the image processing device 14 are implemented by hardware including computing units such as central processing units (CPUs) and various auxiliary processors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks to be described below do not refer to configurations in units of hardware but to blocks in units of functions.

Note that the components of the operation controller 62 and the machining controller 60 may also be implemented by hardware including computing units such as processors, storage devices such as memories and storages, and wired or wireless communication lines that connect these units and devices, and software that is stored in the storage devices and supplies processing instructions to the computing units. The operation controller 62 and the machining controller 60 may be configured as devices separate from the image processing device 14.

The image processing device 14 includes a user interface processing unit 70, a data processing unit 72, a data storage unit 74, and a communication unit 76.

The user interface processing unit 70 performs processes relating to user interfaces such as receiving operations made by a user, displaying images, and outputting audio. The communication unit 76 performs communication with the operation controller 62. The data processing unit 72 performs various processes on the basis of data obtained by the user interface processing unit 70 and data stored in the data storage unit 74. The data processing unit 72 also functions as an interface of the user interface processing unit 70, the data storage unit 74, and the communication unit 76. The data storage unit 74 stores various programs and set data.

The user interface processing unit 70 includes an input unit 80 and an output unit 82.

The input unit 80 receives inputs made by the user via a touch panel or a hardware device such as a handle. The output unit 82 provides the user with various information by image display or audio output. The output unit 82 includes a display unit 84. The display unit 84 performs display of taken images, display accompanying image processing, display for informing the user of occurrence of various events, and the like.

The communication unit 76 includes a receiving unit 110 that receives data from the operation controller 62, and a transmitting unit 112 that transmits data and commands to the operation controller 62.

The data processing unit 72 includes a movement controlling unit 90, an imaging processing unit 92, a shape reproducing unit 94, a display controlling unit 95, a tool managing unit 96, and a determination processing unit 98.

The movement controlling unit 90 drives and controls the opening/shutting mechanism 32 to control opening and closing of the shutter 30, and drives the light source driving mechanism 56 to control the movement of the light source 52. The imaging processing unit 92 controls the imaging unit 50 to image the projection of the subject tool Tx appearing on the shutter 30. The shape reproducing unit 94 generates "tool shape data", which are data indicating the shape of the subject tool Tx on the basis of the image. The display controlling unit 95 controls display performed by the display unit 84. The tool managing unit 96 registers a tool ID and the tool shape data in association with each other for each subject tool Tx in the data storage unit 74.

The determination processing unit 98 determines whether a subject tool Tx has an abnormality such as a fracture, a breakage, or chips entangled therearound (whether or not the subject tool Tx is a faulty tool) on the basis of the image of the subject tool Tx or on the basis of the tool shape data. When the determination processing unit 98 determines that the subject tool Tx has an abnormality, the display controlling unit 95 causes the display unit 84 to display an alert screen for informing the user of the same. The determination processing unit 98 may instruct the operation controller 62 to display the same on the operation panel 12. When a post-use tool Tu is determined to be a faulty tool, the tool managing unit 96 associates the information of being a faulty tool with the tool ID, and registers the associated information as tool information into the data storage unit 74.

The data storage unit 74 includes a tool information storage unit 100 and a shape data storage unit 102. The tool information storage unit 100 stores information (tool information) of each of the tools T accommodated in the magazine 20 in association with the tool ID. The tool information includes information such as the type, the shape, the size, and the length of each tool, for example. The tool information may further include information such as cumulative total hours of use and a cumulative total number of uses. The data storage unit 74 also temporarily stores taken images.

The tool information storage unit 100 updates the tool information each time tool replacement is performed. When a subject tool Tx is determined to be a faulty tool as described above, the tool information storage unit 100 adds the information of being a faulty tool to the tool information. After the determination, the tool managing unit 96 prohibits use of the tool T, which is a faulty tool, that is, tool replacement with the tool T as a pre-use tool Tp by the ATC 34.

The shape data storage unit 102 stores the tool shape data generated by the shape reproducing unit 94 in association with the tool ID. In the embodiment, the tool shape data are generated before and after tool replacement. Thus, for each subject tool Tx, the tool shape data of a pre-use tool Tp (hereinafter also referred to as "pre-use tool shape data") and the tool shape data of a post-use tool Tu (hereinafter also referred to as "post-use tool shape data") are stored in association with the tool ID. The determination processing unit 98 can determine whether or not a post-use tool Tu is a faulty tool by comparing the pre-use tool shape data and the post-use tool shape data of the same tool with each other.

Next, a method for imaging a tool will be explained.

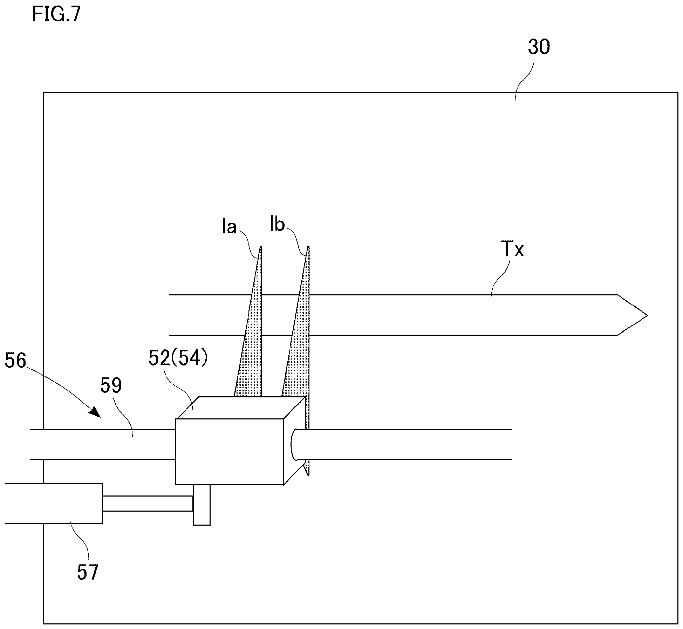

FIGS. 7 to 11 are diagrams schematically illustrating a method for imaging a subject tool Tx.

As illustrated in FIG. 7, the light source driving mechanism 56 includes a guiderail 59 extending in parallel with the subject tool Tx. While being guided by the guiderail 59, the light source 52 is driven in the longitudinal direction of the subject tool Tx by the feed mechanism 57. The laser output unit 54 outputs two line laser beams la and lb in parallel with each other in the short direction of the subject tool Tx. The subject tool Tx is irradiated with these laser beams, so that the projection of the subject tool Tx appears on the shutter 30. While an example of a configuration in which two line laser beams are output from the laser output unit, it is needless to say that the number of line laser beams may be three or more.

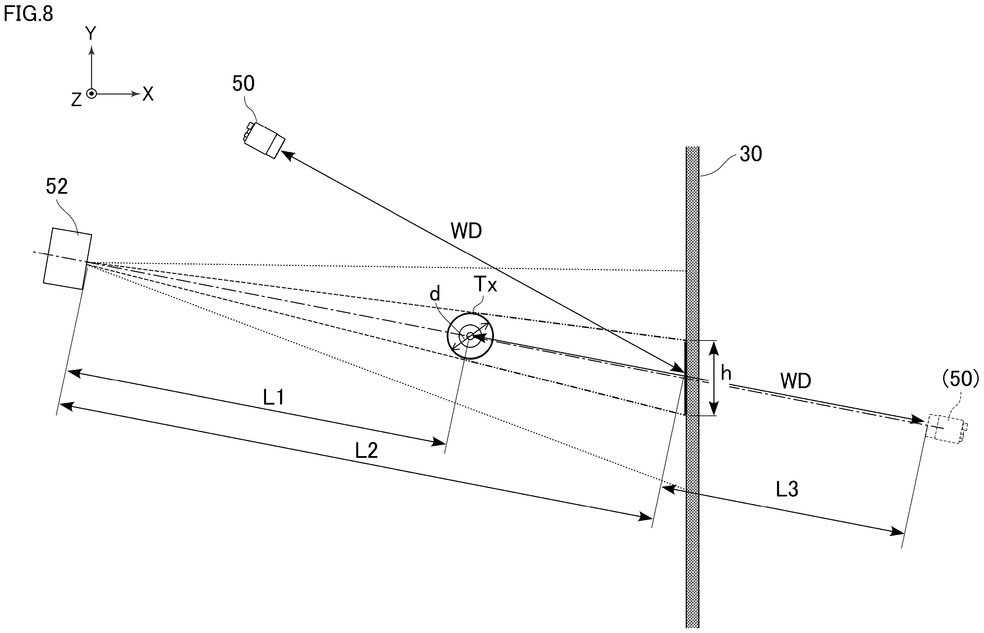

As illustrated in FIG. 8, the projection image of the subject tool Tx appearing on the shutter 30 is imaged by the imaging unit 50. Thus, the light source 52 and the imaging unit 50 are located opposite the shutter 30 with respect to the subject tool Tx. When the diameter of the subject tool Tx (tool diameter) is represented by d, the distance from the light source 52 to the subject tool Tx is represented by L1, and the distance from the subject tool Tx to the projection is represented by L2, the height h of the projection of the subject tool Tx on the shutter 30 is h = d×L2/L1. The WD of the imaging unit 50 is set so that the projection image of the imaging target portion of the subject tool Tx becomes within the angle of view.

The imaging unit 50 illustrated by a broken line in FIG. 8 is an example (comparative example) of a configuration for imaging a silhouette of the subject tool Tx by using transmitted illumination. Assume that the WD of the imaging unit 50 according to the comparative example is the same as that in the embodiment. When the comparative example is adopted, at least a length of L2+L3 is necessary for an installation space of the imaging device, which is larger than that in the embodiment. In other words, the embodiment saves space as compared with the comparative example.

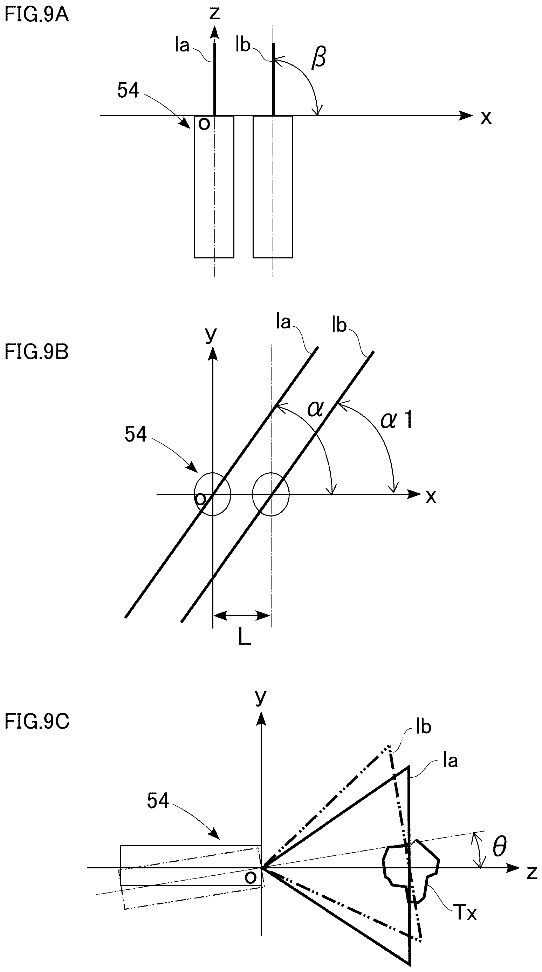

FIGS. 9A to 9C illustrate arrangements of line laser beams. Herein, for convenience of explanation, a coordinate system (x, y, z) of the laser output unit 54 is set. The moving direction of the laser output unit 54 will be referred to as an x-axis direction. A laser irradiation direction, that is, a direction from the laser output unit 54 toward a subject tool Tx (more specifically, a direction of a perpendicular from the laser output unit 54 to a subject tool Tx) will be referred to as a z-axis direction, and a direction perpendicular to the x-axis direction and the z-axis direction will be referred to as a y-axis direction. An output point of a reference laser beam (a line laser beam la in the illustrated example) will be referred to as an origin o. FIG. 9A illustrates an xz plane, FIG. 9B illustrates an xy plane, and FIG. 9C illustrates a yz plane.

A plurality of line laser beams la and lb are output in a planar shape from their respective output points as origin points and in parallel with each other in the z-axis direction (FIGS. 9A to 9C). Herein, the interval between adjacent line laser beams is represented by L. An angle $\beta$ between the irradiation direction of the line laser beams and the x-axis direction is $\beta$=90 degrees (FIG. 9A). An angle $\alpha$ between the plane formed by each line laser beam and the x axis need not be 90 degrees, but the line laser beams are output so that the planes are parallel to each other ($\alpha$=$\alpha$1) (FIG. 9B). In the embodiment, the angle $\alpha$ may be 90 degrees.

Elevation angles $\theta$ of the respective line laser beams (the angles of their optical axes with respect to the z-axis direction) are preferably $\theta$=0 and equal to each other. When the angle $\alpha$ is 90 degrees, however, the elevation angles $\theta$ need not be particularly limited as long as the entire height (the y-axis direction) of the subject tool Tx can be irradiated. When the angle $\alpha$ is $\alpha$≠90 degrees, the angles $\theta$ are $\theta$=0.

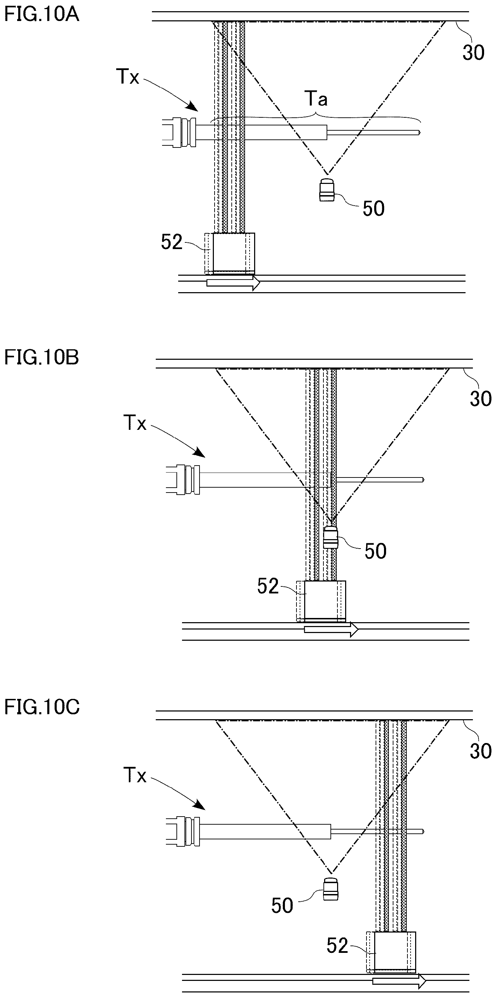

FIGS. 10A to 10C illustrate a process of movement of the light source 52 as viewed from above the subject tool Tx. For image processing of the subject tool Tx, imaging by the imaging unit 50 is performed continuously (consecutive shooting) while the light source 52 is moved in the longitudinal direction of the subject tool Tx. The position of the imaging unit 50 remains fixed. Because the two laser beams are highly directional, two projections are imaged momentarily. Because, however, imaging is performed consecutively with the light source 52 being moved, gaps between the two projections are obtained as projections by subsequent imaging (see broken lines). Thus, a projection image over the entire imaging target portion Ta is obtained.

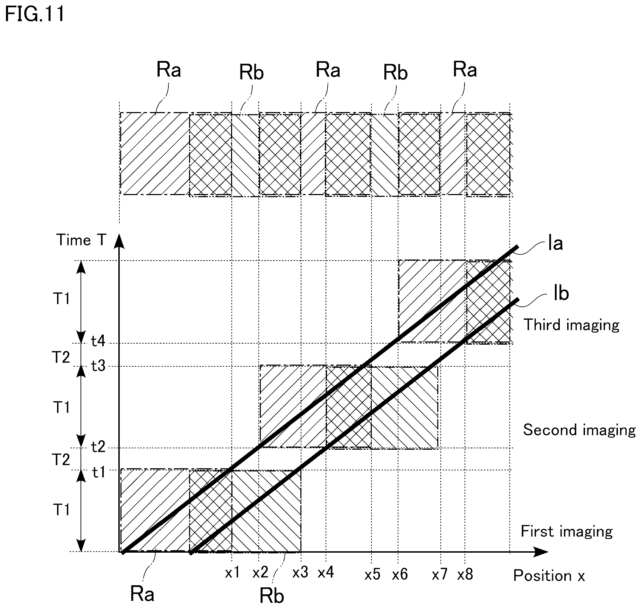

FIG. 11 illustrates a specific example of imaging and image processing. The horizontal axis represents the position in the x-axis direction of each of images obtained by consecutive shooting, and the vertical axis represents the elapsed time. Note that, regarding the imaging unit 50, the exposure time of the image pickup device is represented by T1 and the time between frames of taken images (the time during which the shutter of the camera is closed: hereinafter also referred to as "imaging time interval") is represented by T2.

In FIG. 11, thick lines show irradiation positions of the line laser beams depending on time. In addition, each region surrounded by a one-dot chain line shows an irradiation area of the line laser beam la in each imaging, that is, an imaging area Ra of each imaging performed with irradiation with the line laser beam la. Each area surrounded by a two-dot chain line shows an irradiation area of the line laser beam lb in each imaging, that is, an imaging area Rb of each imaging performed with irradiation with the line laser beam lb.

As illustrated, the exposure time T1 of the imaging unit 50 is set so that a plurality of scanning areas (imaging areas Ra and Rb) with a plurality of line laser beams la and lb overlap with each other in an image obtained by a single imaging. The imaging unit 50 takes a projection image of a tool in a state in which the exposure time T1 in a single imaging is set to a movement time taken by the light source driving mechanism 56 to move the laser output unit 54 a predetermined distance. The imaging unit 50 moves the laser output unit 54 a predetermined distance and performs imaging once to obtain a projection image of a tool. The width of an image obtained by a single imaging performed by the imaging unit 50 is larger than the width of laser beam irradiation in the moving direction of the laser output unit.

In the example of FIG. 11, time t1 to time t2 corresponds to the imaging time interval T2 during which imaging is interrupted between a first imaging and a second imaging, and time t3 to time t4 corresponds to the imaging time interval T2 during which imaging is interrupted between the second imaging and a third imaging. As a result, although there is a gap between a first imaging area Ra and a second imaging area Ra (between a position x1 and a position x2), this gap is included in a first imaging area Rb. In addition, although there is a gap between the first imaging area Rb and a second imaging area Rb (between a position x3 and a position x4), this gap is included in the second imaging area Ra.

Similarly, although there is a gap between the second imaging area Ra and a third imaging area Ra (between a position x5 and a position x6), this gap is included in the second imaging area Rb. In addition, although there is a gap between the second imaging area Rb and a third imaging area Rb (between a position x7 and a position x8), this gap is included in the third imaging area Ra.

As described above, because a plurality of line laser beams la and lb are emitted from the light source 52, a combined image with no missing part over the whole imaging target portion Ta can be obtained even through consecutive shooting with the light source 52 being moved. Furthermore, because irradiation with highly directional laser beams is performed, high contrast images are obtained.

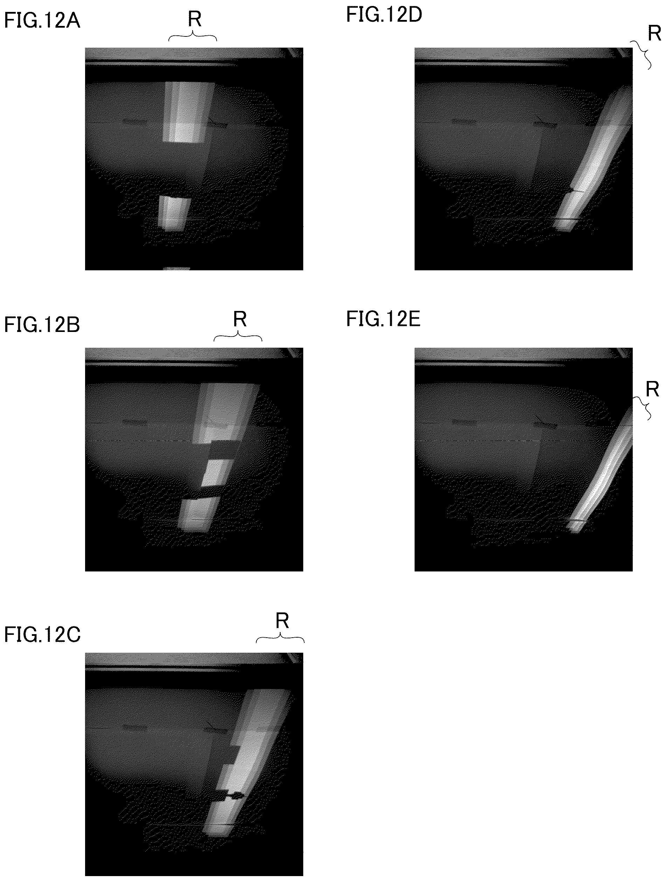

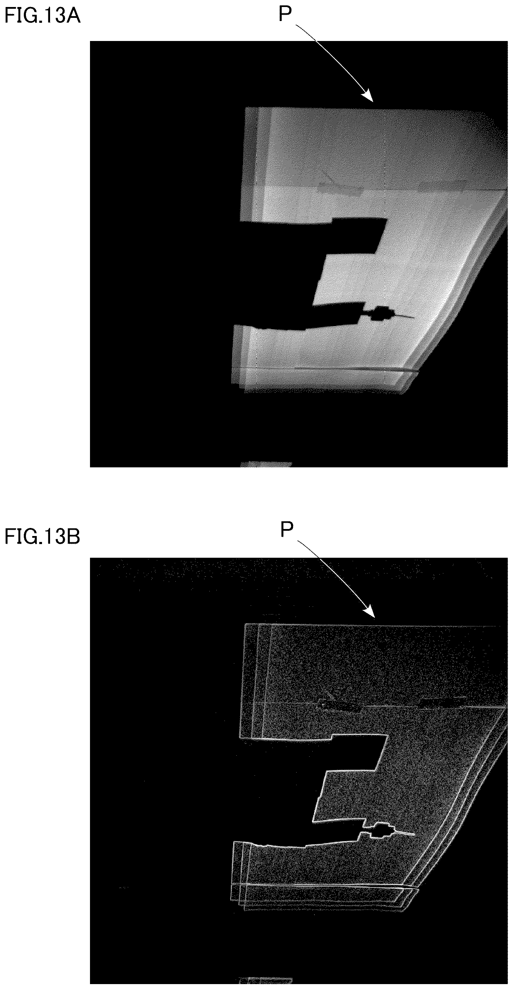

FIGS. 12A to 10E, 13A, and 13B show examples of actual taken images and image processing. FIGS. 12A to 12E show taken images (partial images) that are sequentially obtained. FIG. 13A shows a whole image combining the partial images. FIG. 13B shows edge detection in image processing.

The imaging processing unit 92 extracts, as a partial image, a region R in which a portion of the subject tool Tx projected by a laser beam, that is, a boundary between dark and light is present from each of a plurality of taken images obtained continuously (FIGS. 12A to 12E). The imaging processing unit 92 then combines the partial images to generate a whole image P (FIG. 13A). The imaging processing unit 92 further sets a scanning line in the short direction of the subject tool Tx on the whole image P, and detects, as an edge point, a point at the boundary between a dark region and a light region on the whole image P. The imaging processing unit 92 detects a plurality of edge points with the scanning line being shifted in the longitudinal direction of the subject tool Tx with a constant pitch, and connects the edge points to determine the contour (outline) of the subject tool Tx (FIG. 13B). The shape reproducing unit 94 generates tool shape data on the basis of the determined contour. In the embodiment, the image processing is performed on both of the post-use tool Tu and the pre-use tool Tp.

The determination processing unit 98 compares the pre-use tool shape data and the post-use tool shape data of the same tool with each other. The determination processing unit 98 determines that the subject tool Tx has a fracture or the like, that is, that the subject tool Tx is a faulty tool when the similarity between the pre-use tool shape and the post-use tool shape, or in particular, the similarity in the contour therebetween is a predetermined value or lower. In this case, the display unit 84 displays, for the user, an alert screen indicating that a faulty tool is detected. Alternatively, the informing unit 84 may produce sound such as buzzer sound.

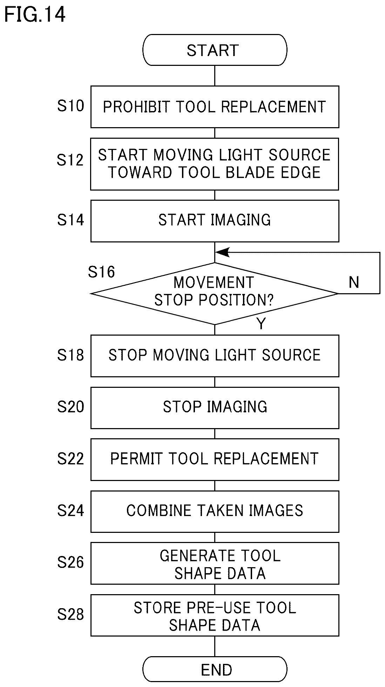

FIG. 14 is a flowchart illustrating a process of obtaining tool shape data.

This process is triggered by a pre-use tool Tp being held horizontally in a standby state in the storage chamber 10 before tool replacement. At this point, the shutter 30 is in the closed state, and the light source 52 is at a standby position. Note that the "standby position" used herein is a stop point near a base end in the longitudinal direction of the subject tool Tx, and is set in advance to include one end (the left end in FIGS. 10A to 10C) of the projection of the imaging target portion Ta.

Prior to this process, the imaging processing unit 92 sets a predetermined tool replacement prohibition flag on (S10). This prohibits tool replacement by the ATC 34 during imaging of a pre-use tool Tp. Subsequently, the movement controlling unit 90 starts moving the light source 52 toward the tool blade edge (S12), and the imaging processing unit 92 starts imaging (consecutive shooting) by the imaging unit 50 (S14). A plurality of images obtained in this process are stored as pre-use tool images.

Then, when the light source 52 has reached a movement stop position (Y in S16), the movement controlling unit 90 stops moving the light source 52 (S18), and the imaging processing unit 92 stops imaging by the imaging unit 50 (S20). Note that the "movement stop position" used herein is a stop position near a distal end in the longitudinal direction of the subject tool Tx, and is set in advance to include the other end (the right end in FIGS. 10A to 10C) of the projection of the imaging target portion Ta. The imaging processing unit 92 turns the tool replacement prohibition flag off (S22). As a result of the completion of imaging, the tool replacement by the ATC 34 is permitted. In other words, the process of imaging a pre-use tool Tp is performed while the tool replacement prohibition flag is on.

The imaging processing unit 92 extracts a partial image in which a boundary between dark and light is present from each of the plurality of pre-use tool images, and combines the partial images (S24). As a result, a whole image P is generated (see FIG. 13A). The shape reproducing unit 94 generates pre-use tool shape data on the basis of the whole image P (S26). The tool managing unit 96 stores the pre-use tool shape data in association with the tool ID into the shape data storage uniT1 02 (S28). The pre-use tool shape data is used for a tool test, which will be described later.

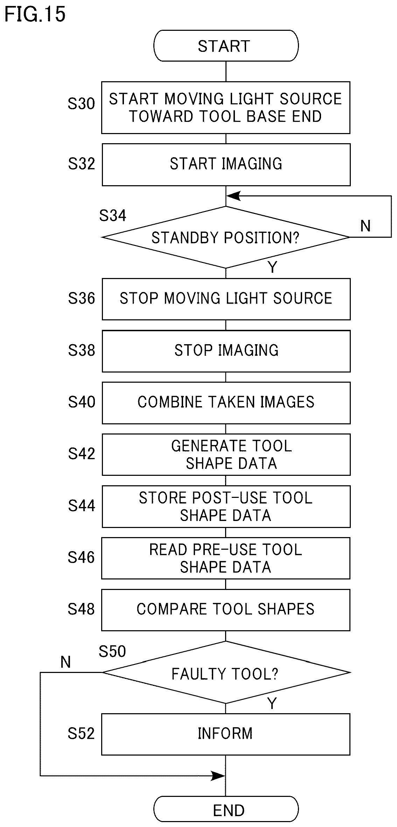

FIG. 15 is a flowchart illustrating a tool testing process.

This process is triggered by a post-use tool Tu being held horizontally in a standby state in the storage chamber 10 after tool replacement and before tool storage. At this point, the shutter 30 is in the closed state, and the light source 52 is at the movement stop position described above.

First, the movement controlling unit 90 starts moving the light source 52 toward the tool base end (S30), and the imaging processing unit 92 starts imaging (consecutive shooting) by the imaging unit 50 (S32). A plurality of images obtained in this process are stored as post-use tool images.

Then, when the light source 52 has reached the standby position described above (Y in S34), the movement controlling unit 90 stops moving the light source 52 (S36), and the imaging processing unit 92 stops imaging by the imaging unit 50 (S38). The imaging processing unit 92 extracts a partial image in which a boundary between dark and light is present from each of the plurality of post-use tool images, and combines the partial images (S40). As a result, a whole image P is generated. The shape reproducing unit 94 generates post-use tool shape data on the basis of the whole image P (S42). The tool managing unit 96 temporarily stores the post-use tool shape data in association with the tool ID into the shape data storage uniT1 02 (S44).

The determination processing unit 98 reads pre-use tool shape data associated with the same tool ID as the post-use tool shape data (S46), and compares these tool shape data with each other (S48). Specifically, the pre-use tool shape and the post-use tool shape of the same tool are compared with each other. If the tool is a faulty tool with the similarity between the post-use tool shape and the pre-use tool shape being a predetermine value or smaller (Y in S50), the determination processing unit 98 causes the display unit 84 to provide information of the same (S52). Specifically, the display unit 84 displays an alert screen. If the tool is not a faulty tool (N in S50), the process of S52 is skipped.

In the embodiment, a post-use tool Tu that is determined to be a faulty tool after tool replacement is also stored in the magazine 20, but the tool is prohibited from being used until predetermined maintenance is performed. The information that the tool is prohibited from being used is stored in association with the tool ID.

Typically, for each tool, upper limits of the number of uses and the hours of use (also referred to as "quality assurance parameters") are determined in order to ensure the quality thereof. Tool with a quality assurance parameter exceeding the upper limit is prohibited from being used, and another tool of the same type (sub-tool) that is additionally provided and stored in the magazine 20 is used. This prevents interruption of a mass production process of the machining equipment 2. In the embodiment, in a case where a tool is detected as a faulty tool, the tool is managed as being prohibited from being used even when the quality assurance parameters do not exceed the upper limits, and a sub-tool is used.

The machine tool 1 has been described above on the basis of the embodiment.

In the embodiment, a subject tool Tx is consecutively shot while the light source 52 is moved in the longitudinal direction of the subject tool Tx, and resulting images are combined to obtain an image of an imaging target portion Ta of the subject tool Tx. Because consecutive shooting is performed without interruption of the light source, a whole image of an imaging target portion Ta can be efficiently obtained regardless of the length of a subject tool Tx. In particular, the imaging device performs consecutive shooting by scanning with a plurality of line laser beams to continuously obtain images of a plurality of lines. Thus, high contrast images can be obtained. Furthermore, even if a portion that could not be imaged momentarily within the shutter on/off operation time of a camera is present, it is possible to interpolate between the images of the plurality of lines. In other words, the relation of the intervals between the plurality of line laser beams, the moving speed of the light source 52, and the consecutive shooting speed of the imaging unit 50 is set so that the interpolation can be performed with the plurality of partial images. Thus, the partial images can be combined to obtain a whole image of the subject tool Tx with no missing parts of the projection images.

Furthermore, in the embodiment, the shutter 30 located opposite the light source 52 with respect to the subject tool Tx is the projection part. In addition, the imaging unit 50 images a projection image of a subject tool Tx projected onto the shutter 30 by light emitted from the light source 52. This relative arrangement eliminates the need for a large space in the optical axis direction of the light source 52 even when the imaging unit 50 has a relatively large WD. Furthermore, because projection images are processed, the amount of image information to be processed can be reduced. Thus, according to the embodiment, the imaging device achieves robust image processing while saving space.

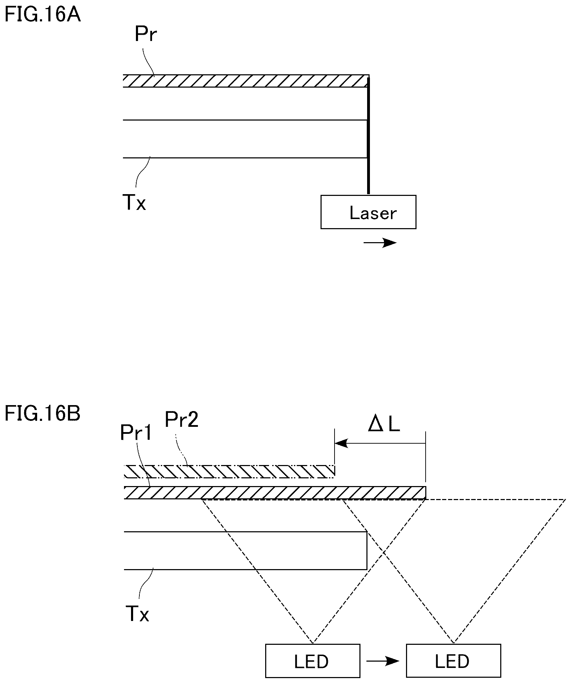

FIGS. 16A and 16B schematically illustrate a difference in projected image depending on the type of illumination. FIG. 16A illustrates a case where laser is used for illumination, and FIG. 16B illustrates a case where LEDs are used for illumination.

In a case where laser is used for illumination as in the embodiment, the high directional characteristics of laser allow projection of a leading end (edge portion) of a subject tool Tx in one direction, and an accurate projection image Pr is obtained (FIG. 16A). In contrast, in a case where LEDs are used for illumination as in the comparative example, the low directional characteristics result in a large irradiation angle. Thus, when the LEDs are moved in the longitudinal direction of a subject tool Tx, the irradiation position (irradiation direction) relative to a leading end (edge portion) of the subject tool Tx changes. As a result, the position of a projection image varies, such as projection images Pr1 and Pr2 that are projection images of the edge portion. There is therefore a limit to obtain a highly accurate and high contrast tool contour shape. In other words, according to the embodiment, use of laser for illumination enables a highly accurate and high contrast tool contour shape to be obtained.

The present invention is not limited to the embodiment and modifications thereof described above, and any component thereof may be modified and embodied without departing from the scope of the invention. Components described in the embodiments and modifications may be combined as appropriate to form various embodiments. Some components may be omitted from the components presented in the embodiments and modifications.

[Modifications]

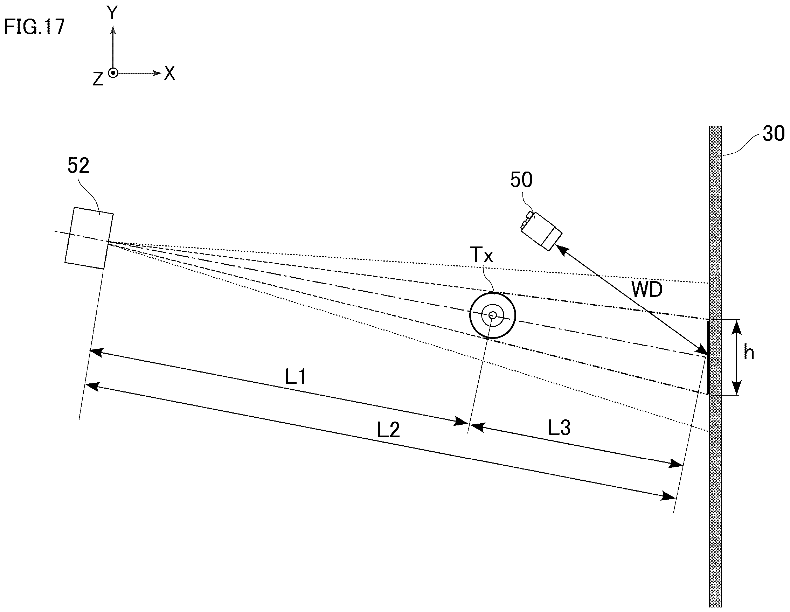

FIG. 17 is a diagram schematically illustrating a method for imaging a subject tool Tx according to a first modification.

In this modification, while the light source 52 is located opposite the shutter 30 with respect to the subject tool Tx, the imaging unit 50 is located on the same side as the shutter 30 with respect to the subject tool Tx. Such an arrangement may be adopted depending on the WD of the light source 52. Even with such a configuration, space can be saved as compared with an imaging device using transmitted illumination (comparative example) (see broken lines in FIG. 8).

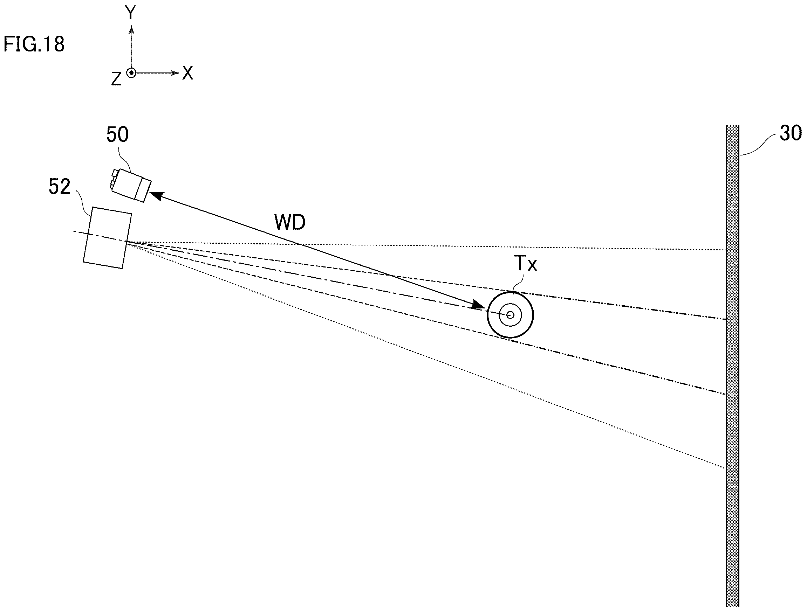

FIG. 18 is a diagram schematically illustrating a method for imaging a subject tool Tx according to a second modification.

In this modification, a subject tool Tx itself, instead of a projection image thereof, is imaged by the imaging unit 50. Specifically, an image of a subject tool Tx is obtained by using reflected illumination by a plurality of line laser beams. The imaging unit 50 is located near the light source 52. The imaging unit 50 is arranged so that the subject tool Tx is present on its optical axis.

According to this modification, while light and dark regions in an image are reversed from those in the embodiment described above, the methods of imaging and image processing are similar to those in the embodiment. A dark background may be applied before a subject tool Tx is irradiated with line laser beams. A contour of a subject tool Tx can be determined by detecting edge points at the boundary between dark regions and light regions in a whole image.

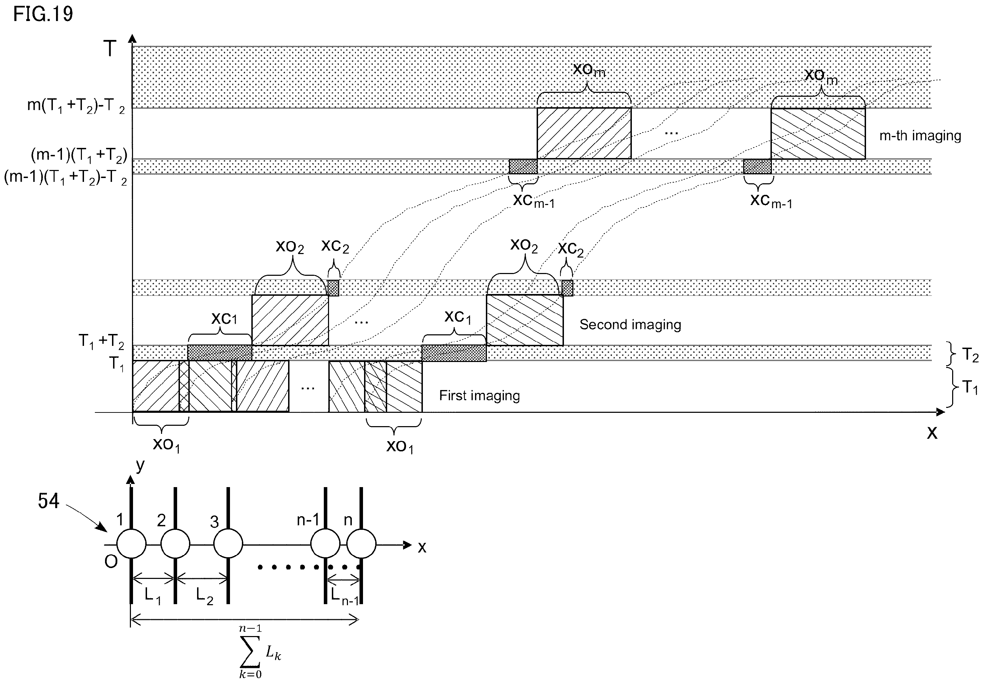

FIG. 19 is a diagram illustrating a specific example of imaging and image processing according to a third modification. The horizontal axis represents the position in the x-axis direction of each of images obtained by consecutive shooting, and the vertical axis represents the elapsed time. The exposure time T1 and the imaging time interval T2 are similar to those in the embodiment described above.

While an example in which irradiation with two line laser beams are performed has been presented in the embodiment described above, this modification presents an example in which the number of line laser beams, the intervals between line laser beams, and the moving speed of the laser output unit are generalized. Specifically, as illustrated in a lower part of FIG. 19, in this modification, n line laser beams (n is a natural number) are output from the laser output unit 54. The intervals between adjacent line laser beams are represented by L1 to $L_{n-1}$. The moving speed of the laser output unit 54 is represented by V. Dotted lines in FIG. 19 show irradiation positions of the line laser beams depending on time.

$xo_m$ represents an irradiation area of each line laser beam in an m-th image, that is, an imaging area of a single imaging performed with each line laser beam, and is expressed by the following formula (1):

[Formula 1]

$$xo_m = \int_{k(T_1+T_2)-T_2}^{k(T_1+T_2)} V dt \quad (k=1,2,3\cdots m) \quad \cdots (1)$$

$xc_m$ represents an area that cannot be imaged between frames after imaging of an m-th image, that is, an area corresponding to an imaging time interval T2, and is expressed by the following formula (2):

[Formula 2]

$$xc_m = \int_{j(T_1+T_2)}^{j(T_1+T_2)-T_2} V dt \quad (j=1,2,3\cdots m-1) \quad \cdots (2)$$

In this case, when the following formula (3) is satisfied, a combined image with no missing part over a whole imaging target portion Ta can be obtained:

[Formula 3]

$$XC_j < XO_j + \sum_{k=1}^{n-1} L_k \quad \text{and}$$

$$L_k < XO_j \quad (k=1,2,3\cdots m,\ j=1,2,3\cdots m-1) \quad \cdots(3)$$

Specifically, as also shown in this modification, a plurality of line laser beams may be output and a plurality of projection images may be obtained. An image processing unit can generate a whole image by combining all of a plurality of projection images obtained by imaging.

[Other modifications]

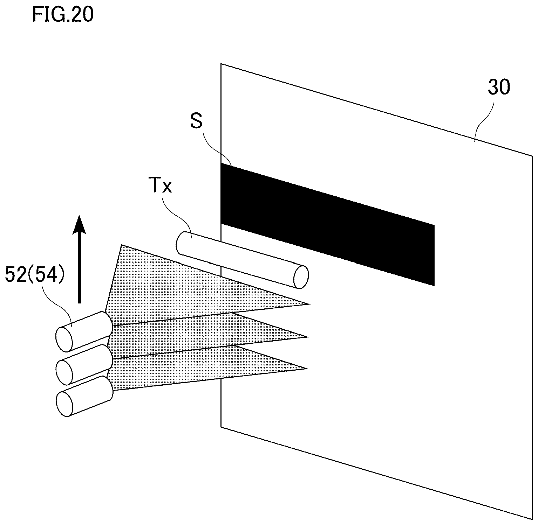

FIG. 20 is a diagram schematically illustrating a method for imaging a subject tool Tx according to a modification.

In the embodiment described above, an example of a configuration in which the light source driving mechanism 56 is constituted by the feed mechanism 57 and in which imaging of the subject tool Tx is performed while the laser output unit 54 is moved in the longitudinal direction of the subject tool Tx to scan with the line laser beams has been presented. In this modification, a subject tool Tx is imaged a plurality of times while the laser output unit 54 is moved in the short direction (the radial direction: in the direction of an arrow in FIG. 20) of the subject tool Tx and scanning is performed with a plurality of line laser beams. In this manner as well, a projection image S of the subject tool Tx can be projected onto a projection part such as the shutter 30. In another modification, the light source driving mechanism may be a so-called oscillating mechanism that turns the laser output unit 54 about a predetermined rotation axis so that scanning of subject tool Tx is performed with line laser beams in the longitudinal direction or in the short direction. A subject tool Tx itself, instead of a projection image thereof, may be imaged.

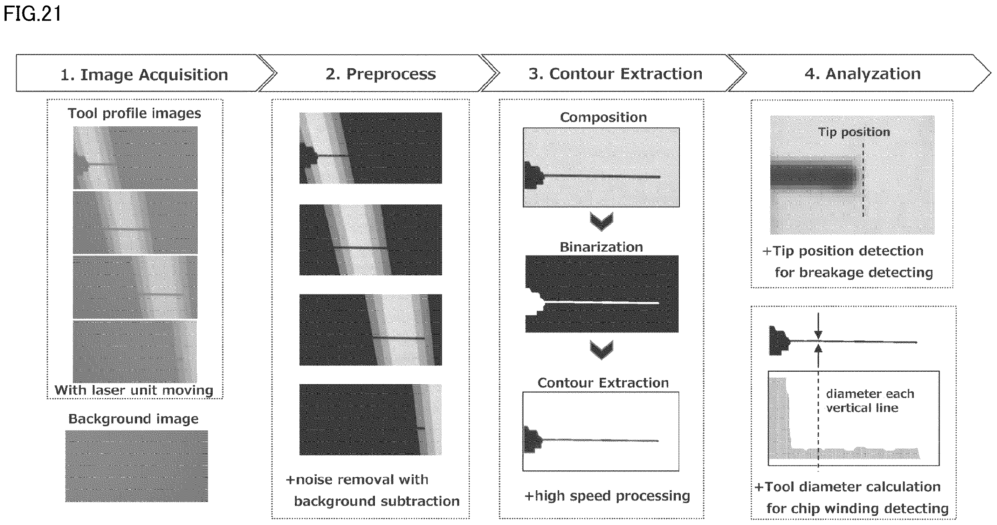

FIG. 21 is a diagram illustrating processes of an image processing method according to a modification. FIG. 21 shows, from the left, such processes as an image acquisition process, a preprocessing process, a contour extraction process, and an analyzation process. These processes are performed by the image processing device 14. Hereinafter, description will be provided with reference to the function illustrated in FIG. 6.

In the image acquisition process, in a manner similar to the embodiment described above, the light source driving mechanism 56 moves the laser output unit 54 to perform scanning with a plurality of line laser beams in the longitudinal direction of a tool, and the imaging unit 50 images the tool a plurality of times to obtain projection images thereof. In the example of FIG. 21, four images are acquired. The imaging is performed a plurality of times in this manner, so that the exposure time at each imaging is limited. This is because an exposure time that is too long increases the background luminance up to saturation, which makes it difficult to obtain high contrast projection images.

In the meantime, a background image (image data) taken with no tool by the imaging unit 50 is stored in advance in the data storage unit 74. The exposure time for the background image corresponds to the exposure time of each imaging described above.

In the preprocessing process, the imaging processing unit 92 removes noise by obtaining differences in luminance between the taken images and the background image, and extracts luminance values associated with laser. This preprocessing process can be performed after an imaging process is completed. In this modification, however, the image acquisition process and the preprocessing process are performed in parallel, and the preprocessing is performed each time a taken image is obtained.

In the contour extraction process, the imaging processing unit 92 first extracts partial images of the subject tool Tx from the acquired taken images and combines the extracted partial images to obtain a whole image (projection image) of the tool. Subsequently, the imaging processing unit 92 binarizes the projection image and extracts (determines) a contour of the tool in the whole image. In this modification, the method for the contour extraction is changed depending on the type of tool test, such as detection of a tool breakage or detection of chips adhered to a tool. After the contour extraction of the tool, the imaging processing unit 92 analyzes the images for the tool test.

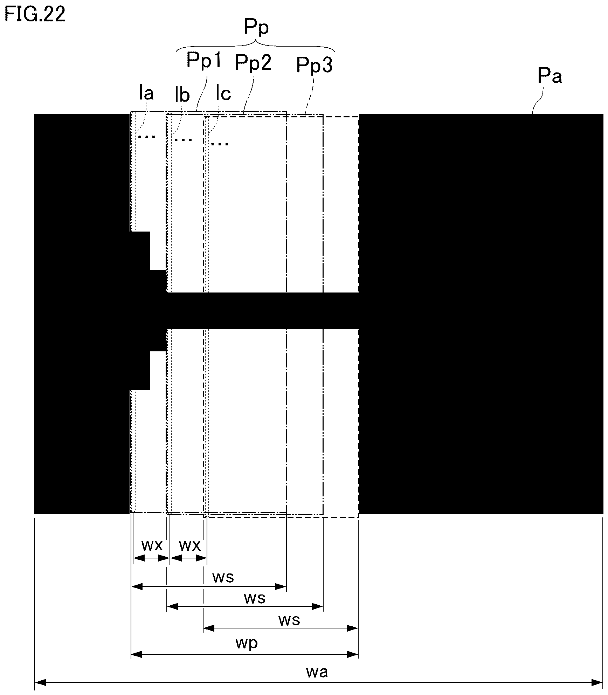

FIG. 22 is a diagram schematically illustrating an example of one image acquired in the image acquisition process.

A width (wp) of a partial image region Pp, in which projection images can be taken by a single imaging performed by the imaging unit 50, is larger than the widths of the laser beams (la, lb, and lc) and smaller than the width (wa) of a taken image in the moving direction of the laser output unit 54. Part of the taken image Pa obtained by a single imaging performed by the imaging unit 50 corresponds to the partial image region Pp, in which projection images projected by the laser beams can be imaged.

The partial image region Pp is an image in which a series of projection images obtained by scanning with a plurality of line laser beams are taken. In the example of FIG. 22, the laser output unit 54 includes three line laser beams la, lb, and lc. Because the exposure time is set as described above, a scanning area Pp1 (see a one-dot chain line) of the line laser beam la, a scanning area Pp2 (see a two-dot chain line) of the line laser beam lb, and a scanning area Pp3 (see a dashed line) of the line laser beam Ic partially overlap with each other in the scanning direction (in the moving direction of the laser output unit 54). A photodetector of the imaging unit 50 is exposed while the line laser beam Ia moves a scanning distance ws, and the shutter is closed (light reception is stopped) at the point when the line laser beam Ia reaches the end of the scanning distance to acquire the taken image Pa containing one partial image region Pp.

Because the scanning distances of the line laser beams Ia, Ib, and Ic are equal to each other in the moving direction of the laser output unit 54, the widths ws of the scanning areas are also equal to each other. Note that, in the example of FIG. 22, the width (wa) of the taken image Pa is set to be 15 times the interval (wx) between adjacent line laser beams, the interval (wx) corresponding to the width of laser irradiation. Because the amount of light received by the photodetector within the exposure time varies depending on the overlaps of the scanning areas, a plurality of strips (light and dark portions) appear in the partial image region Pp. The interval (wx) between line laser beams, which corresponds to the width of laser irradiation, therefore corresponds to the width of the plurality of strip-like light and dark portions appearing in the partial image region Pp. In view of constraints such as image processing time and installation spaces, the width (wa) of the taken image Pa is preferably set within a range of five times or more but 20 times or less the interval (wx) between the line laser beams corresponding to the width of laser irradiation. More preferably, the width (wa) is within a range of 10 times or more but 20 times or less the interval (wx).

While three line laser beams are used in the description of the embodiment, the number of line laser beams is not limited thereto. Thus, a single line laser beam may be used for imaging. In this case, the width (wa) of the taken image Pa is set to 3.6 ($=15 \div 4$) times the width (ws) of laser irradiation. Similarly, in view of image processing time and installation spaces, the width (wa) of the taken image Pa is preferably set within a range of 1.2 times or more but 4.8 times or less the width (ws) of laser irradiation. More preferably, the width (wa) is within a range of 2.4 times or more but 4.8 times or less the width (ws).

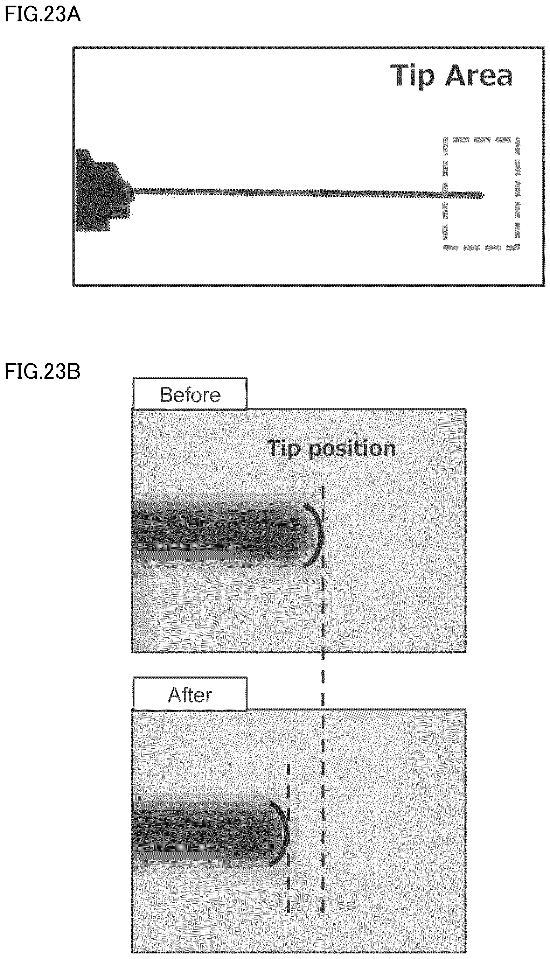

FIGS. 23A and 23B are diagrams illustrating a method for detecting a breakage of a tool. FIG. 23A illustrates a projection image (whole image) of a tool, and FIG. 23B illustrates a breakage detection method performed after the tool is used.

As illustrated in FIG. 23A, for detecting a breakage of a tool, the contour of the tool is extracted with a focus on the tool tip.

Specifically, a scanning line in the longitudinal direction of a tool is set near the tip of the tool in a whole image, and points located at the boundary between dark regions and light regions are detected as edge points (edge points showing the tool tip). The imaging processing unit 92 moves the scanning line by a constant pitch in the short direction of the tool to detect a plurality of edge points, and connects these edge points to determine the contour of the tip of the subject tool Tx. Determination of the tip contour corresponds to determination of the tip position. Limiting the contour extraction to the vicinity of a tool tip in this manner reduces the processing load.

As illustrated in FIG. 23B, in the analyzation process, a tool tip position is detected and compared between before and after use of the tool. If the tip position of a pre-use tool (Before) is different from that of a post-use tool (After) and the latter is closer to the base end side than the former, the tool can be determined as being broken or worn (that is, a faulty tool). The display controlling unit 95 causes the display unit 84 to display an alert screen for informing the use of the same. Note that, according to the breakage determination, a tool may be determined to be broken when a difference in the position of the post-use state and the pre-use state of a tool is equal to or larger than a determination reference value or when a difference in the length of the post-use state and the pre-use state of a tool is equal to or larger than a determination reference value.

An image processing device according to this modification can be expressed as follows, for example.

An image processing device applicable to an imaging device including a laser output unit configured to output a plurality of laser beams to be incident on a tool in a direction intersecting (perpendicular to) a longitudinal direction of the tool, a driving mechanism configured to drive the laser output unit to perform scanning with the plurality of laser beams in the longitudinal direction or a short direction of the tool, and an imaging unit configured to image a projection image of the tool, the image processing device being configured to process an image taken by the imaging unit, the image processing device comprising:

an image processing unit configured to detect an edge point of a tip of a tool from projection images obtained by imaging of a tool in a pre-use state before being used for machining and the tool in a post-use state after being used for machining and determine a position of the tip on the basis of the edge points; and
a determination processing unit configured to determine whether or not the tool in the post-use state has a breakage on the basis of a difference in the determined position of the tip of the tool between the pre-use state and the post-use state.

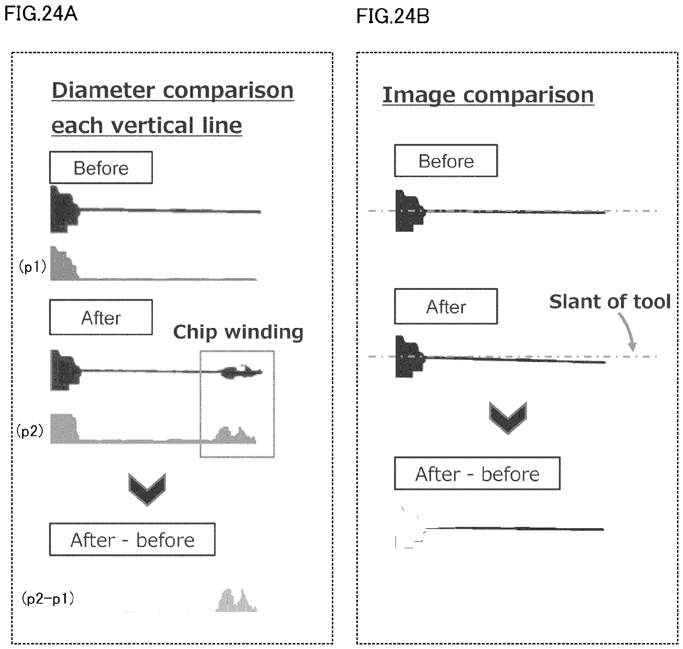

FIGS. 24A and 24B are diagrams illustrating a method for detecting chips adhered to a tool. FIG. 24A illustrates a detection method according to the modification, and FIG. 24B illustrates a detection method according to a comparative example.

As illustrated in FIG. 24A, according to this modification, for detection of chips entangled with a tool, focus is placed on a change in detected tool diameter to determine whether chips are present. Specifically, after the contour of a tool is determined in a manner similar to the embodiment described above, the number of pixels corresponding to the tool diameter is detected at each position in the longitudinal direction of the tool from binarized images of the projection images of the tool, and chip entanglement is determined to be present when a difference in the number of pixels corresponding to the tool diameter between before and after use of the tool has become a determination reference value or larger.

Specifically, the imaging processing unit 92 detects (calculates) the number p1 of pixels in the tool diameter direction of an imaging target portion (from a blade base to a blade edge) by using an image (tool projection image) of the tool determined for the tool in the pre-use state (Before). Similarly, the imaging processing unit 92 detects (calculates) the number p2 of pixels in the tool diameter direction of the imaging target portion (from the blade base to the blade edge) by using an image (tool projection image) of the tool determined for the tool in the post-use state (After).

The determination processing unit 98 determines that entanglement of chips with the subject tool is present (that is, the tool is a faulty tool) when the difference between the numbers of pixels (p2-p1) has become equal to or larger than a determination reference value. The display controlling unit 95 causes the display unit 84 to display an alert screen for informing the user of the same. Note that an appropriate value is set for the determination reference value in view of the influence of noise and the like.

In contrast, as illustrated in FIG. 24B, according to the comparative example, shape data (contour shapes of a tool) are compared between a pre-use state (Before) and a post-use state (After) of the tool, and whether entanglement of chips is present is determined on the basis of the difference therebetween. According to this method, if the tool is not accurately clamped in a pot in either one of the pre-use state and the post-use state, false detection of chip entanglement with the tool may occur. In the example of FIG. 24B, the tool in the post-use state (After) slants relative to the axis of the pot, which is a case where the tool is not accurately clamped. In this case, a difference in shape between the pre-use state and the post-use state of the tool that should, in fact, not present appears, which may affect the detection of chip entanglement.

In other words, according to this modification, even if a tool is not accurately clamped in a pot in either of the pre-use state and the post-use state, an error is unlikely to be present because chip entanglement determination is based on the tool diameter. Thus, false detection of chips is unlikely to occur.

An image processing device according to this modification can be expressed as follows, for example.

An image processing device applicable to an imaging device including a laser output unit configured to output a plurality of laser beams to be incident on a tool in a direction intersecting a longitudinal direction of the tool, a driving mechanism configured to drive the laser output unit to perform scanning with the plurality of laser beams in the longitudinal direction or a short direction of the tool, and an imaging unit configured to image a projection image of the tool, the image processing device being configured to process an image taken by the imaging unit, the image processing device comprising:

> an image processing unit configured to obtain binarized images from projection images obtained by imaging a tool in each of a pre-use state before being used for machining and in a post-use state after being used for machining, and calculate numbers of pixels in a tool diameter direction in the binarized images; and
> a determination processing unit configured to determine whether or not chip entanglement with the tool in the post-use state is present on the basis of a difference between the calculated numbers of pixels in the tool diameter direction of the tool in the pre-use state and in the post-use state.

In the embodiment described above, an example of a configuration in which the laser output unit 54 is moved in the longitudinal direction of the subject tool Tx so that scanning is performed with the line laser beams and the subject tool Tx is consecutively shot, that is, imaged a plurality of times has been presented. In a modification, imaging may be performed once with a longer exposure time of a camera. Performing imaging a plurality of times, however, is more advantageous in terms of the contrast.

In the embodiment described above, line laser beams have been presented as an example of a plurality of laser beams output from the laser output unit 54. In a modification, a point laser may alternatively be used. A plurality of point laser beams may be emitted.

In the embodiment described above, an example in which laser scanning is performed once in the longitudinal direction of a tool without interrupting the laser output unit and a combined image is then generated from a plurality of images obtained by a plurality of times of imaging has been presented. Two image data to be combined may be image data that are partially overlapped with each other to generate a combined image in which the shape of a tool seamlessly appears. Alternatively, a combined image may be obtained by processing two image data processed to be arranged next to each other so that the shape of a tool seamlessly appears.

Although not mentioned in the embodiment described above, the structure of the comparative example illustrated by the broken line in FIG. 8, that is, an imaging device using transmitted illumination may be adopted. In this case, the lens of the camera is made to be large enough to collect laser beams from the light source. Specifically, if the camera is installed at the position of the shutter 30 in FIG. 8, the lens size of the camera is made to be larger than the height h of the shadow of a subject tool Tx.

In the embodiment described above, tool length information is stored in association with a tool ID in the tool information storage uniT1 00. Thus, the movement controlling unit 90 may read tool information associated with the subject tool Tx, and change the amount of movement of the light source 52 depending on the tool length. In other words, each movement stop position may be set depending on the length of the subject tool Tx.

In the embodiment described above, an example of a configuration in which the determination processing unit 98 determines whether a subject tool Tx is a faulty tool has been presented. In a modification, tool shape data of a pre-use tool Tp and a post-use tool Tu generated by the shape reproducing unit 94 may be drawn and displayed on the display unit 84 in a manner in which the tool shape data can be compared. A user may determine whether or not the subject tool Tx is a faulty tool by visually comparing the tool shapes before and after use.

In the embodiment described above, imaging of each subject tool Tx is performed before and after tool replacement (that is, before and after machining) to generate tool shape data. Then, the pre-use tool shape data and the post-use tool shape data are compared with each other for each tool so that whether or not the tool has an abnormality such as a fracture or the like. In a modification, the faulty tool determination process may be performed using a tool image itself without generating tool shape data (tool contour data). Specifically, whether or not a post-use tool Tu is a faulty tool may be determined on the basis of comparison between a pre-use tool image and a post-use tool image of each subject tool Tx.

In the embodiment described above, each subject tool Tx is imaged immediately before and after machining, and the state of each post-use tool Tu (whether or not each post-use tool Tu is a faulty tool) is determined. In other words, an example in which a taken image immediately before use is used as a "reference image" for determination has been presented. In a modification, a reference image may be stored as basic data at tool registration before start of initial use of each tool.

In the embodiment described above, the imaging unit 50 and the light source 52 are arranged above the subject tool Tx as illustrated in FIG. 8. In a modification, either one of the imaging unit 50 and the light source 52 may be arranged above the subject tool Tx and the other may be arranged below the subject tool Tx. Alternatively, the light source 52 may be arranged at the same height as the subject tool Tx and the imaging unit 50 may be arranged above or below the subject tool Tx. Any arrangement in which the subject tool Tx does not interfere with imaging of projection images by the imaging unit 50 may be applied.

While the shutter 30, which is a movable member, is the "projection part" in the embodiment described above, the subject tool Tx may be projected onto an oil pan that is fixed to the equipment in an immovable manner for preventing oil, a partition plate, a side wall, a side face cover, or the like as the "projection part". Alternatively, the subject tool Tx may be projected onto a flat portion of a robot arm, which is a movable member, as the "projection part". For accurate detection of a tool edge in order to detect tool wear and the like, the portion of the projection part on which the silhouette of a tool appears preferably has a flat surface. In a case where the imaging device is used for detection of chip entanglement, detection of tool breakage, or the like, detection can be sufficiently performed through projection of the silhouette on a curved surface.

In the embodiment described above, an example in which the "display unit" is provided in the image processing device 14 has been presented. In a modification, the display screen of the operation panel 12 of the machine tool1 may be the "display unit".

Although not described in detail in the embodiment, line laser beams may have wavelengths different from that of lighting of a chamber in which the subject tool Tx is located. The laser output unit 54 may have a bandpass filter function and output line laser beams having specific wavelengths. The line laser beams may be visible light or may be ultraviolet light or infrared light.

In the embodiment described above, an example of a configuration in which each poT2 2 of the magazine 20 is the "tool support" that supports the subject tool Tx in a standby state in the storage chamber 10 has been presented. In a modification, the ATC 34 (more specifically, the arm 38) may function as the "tool support". Specifically, the movement of the light source 52 and the imaging process by the imaging unit 50 may be performed with the subject tool before or after tool replacement being supported by the ATC.

While the ATC 34 has been presented as an example of a "tool conveying part" in the embodiment described above, a tool conveying mechanism for conveying tools between the machining chamber and the storage chamber without having the tool replacing function may be provided.

While an example of a machining center as the machine tool 1 has been presented in the embodiment, it is needless to say that the tool testing technology described above is also applicable to turning centers and combined machines.

In the embodiment described above, an example in which the imaging device is the machine tool 1 has been presented. The imaging device, however, is not limited thereto. For example, the imaging device may be the tool storage equipment (see FIG. 5). In a case where the tool storage equipment is the imaging device, a side wall or the like of the tool storage equipment serves as the projection part.

While an example of a configuration in which tool storage equipment for a single machine tool is provided has been presented in the embodiment described above, tool storage equipment (such as a tool rack) shared by a plurality of machine tools may be provided. Tool storage equipment includes a tool storage for storing tools, and a tool support for supporting a tool taken from the tool storage. In addition, a conveyer may convey a necessary tool from the tool storage equipment to each machine tool. The tool storage equipment may be provided with the imaging device described above.

Although not mentioned in the embodiment described above, when the imaging device (see FIG. 8) has a small WD, the distance between the imaging unit 50 (see solid lines) and the shutter 30 may be smaller than the distance L3 between the imaging unit 50 (see broken lines) and the shutter 30 in the comparative example.

In addition, the imaging unit 50 may be located in a light irradiation area of the light source 52 (the inner side of dotted lines in FIG. 8.

This application claims priority to Japanese Patent Application No. 2022-095929 filed on June 14, 2022, which is incorporated herein by reference in its entirety.

**Claims**

1. An imaging device comprising:

   a laser output unit configured to output a plurality of laser beams to be incident on a tool in a direction intersecting a longitudinal direction of the tool;
   a driving mechanism configured to drive the laser output unit to perform scanning with the plurality of laser beams in the longitudinal direction or a short direction of the tool; and
   an imaging unit configured to image the tool or a projection image of the tool in a state in which an exposure time in a single imaging is set to correspond to a movement time taken by the driving mechanism to move the laser output unit a predetermined distance.

2. An imaging device comprising:

   a laser output unit configured to output a plurality of laser beams to be incident on a tool in a direction intersecting a longitudinal direction of the tool;
   a driving mechanism configured to drive the laser output unit to perform scanning with the plurality of laser beams in the longitudinal direction or a short direction of the tool; and
   an imaging unit configured to move the laser output unit a predetermined distance and perform a single imaging of the tool or a projection image of the tool,
   wherein a width of an image obtained by the single imaging performed by the imaging unit is larger than a width of laser beam irradiation in a moving direction of the laser output unit.

3. The imaging device according to claim 1 or 2,

   wherein the driving mechanism moves the laser output unit in the longitudinal direction or the short direction of the tool, and
   wherein the imaging unit images the tool or the projection image of the tool with movement of the laser output unit.

4. The imaging device according to claim 3, further comprising:

   a display unit configured to display a shape of the tool obtained by processing an image of the tool or the projection image of the tool;
   wherein the imaging unit performs imaging of the projection image of the tool a plurality of times with the movement of the laser output unit, and
   wherein the display unit displays, as the shape of the tool, a whole image obtained by combining a plurality of images obtained by the imaging.

5. The imaging device according to claim 1 or 2, wherein
   a relation between an imaging area $xo_j$ of each imaging performed with irradiation with each laser beam and an area $xc_j$ that cannot be imaged with irradiation with each laser beam is set as expressed by the following formula so as to obtain an image over a whole length of an imaging target portion of the tool:
   [Formula]

$$XC_j < XO_j + \sum_{k=1}^{n-1} L_k \quad \text{and}$$

$$L_k < XO_j \quad (k=1,2,3\cdots m, \; j=1,2,3\cdots m-1)$$

$$XO_m = \int_{k(T_1+T_2)-T_2}^{k(T_1+T_2)} V dt \quad (k=1,2,3\cdots m)$$

$$XC_m = \int_{j(T_1+T_2)}^{j(T_1+T_2)-T_2} V dt \quad (j=1,2,3\cdots m-1)$$

where m represents a number of times of imaging, n represents a number of laser beams, Lk represents an interval between adjacent laser beams, V represents a moving speed of the laser output unit, T1 represents exposure time of an image pickup device of the imaging unit, and T2 represents an imaging time interval of the imaging unit.

6. Tool storage equipment comprising:

a tool storage for storing tools;
a tool support for supporting a tool taken from the tool storage;
a laser output unit configured to output a plurality of laser beams to be incident on the tool, supported by the tool support, in a direction intersecting a longitudinal direction of the tool;
a driving mechanism configured to drive the laser output unit to perform scanning with the plurality of laser beams in the longitudinal direction or a short direction of the tool; and
an imaging unit configured to image the tool or a projection image of the tool in a state in which an exposure time in a single imaging is set to correspond to a movement time taken by the driving mechanism to move the laser output unit a predetermined distance.

7. A machine tool comprising:

a tool support for supporting a tool;
a laser output unit configured to output a plurality of laser beams to be incident on the tool, supported by the tool support, in a direction intersecting a longitudinal direction of the tool;
a driving mechanism configured to drive the laser output unit to perform scanning with the plurality of laser beams in the longitudinal direction or a short direction of the tool; and
an imaging unit configured to image the tool or a projection image of the tool in a state in which an exposure time in a single imaging is set to correspond to a movement time taken by the driving mechanism to move the laser output unit a predetermined distance.

FIG.1

EP 4 541 508 A1

FIG.2

1

28
30
32
T(Tx)
8
10
26
22 34
22
T ...
T ...
22
T
22
20
24
4

Z
Y
X

FIG.3

4

FIG.4

FIG.5

IMAGE PROCESSING DEVICE ~14

1 (EXAMPLE OF IMAGING DEVICE)

OPERATION CONTROLLER ~62

MACHINING CONTROLLER ~60

ATC ~34

MACHINING EQUIPMENT ~2

TOOL STORAGE EQUIPMENT ~4

1 (ANOTHER EXAMPLE OF IMAGING DEVICE)

FIG.6

```
                                                                      ⌐70
  ┌──────────────────────────────────────────────────────────────┐
  │   USER INTERFACE PROCESSING UNIT                               │
  │                                                                │
  │           80                              82                   │
  │    ┌──────────────────┐       ┌──────────────────────────┐    │
  │    │                  │       │   OUTPUT UNIT             │    │
  │    │   INPUT UNIT     │       │                  ⌐84      │    │
  │    │                  │       │    ┌──────────────────┐   │    │
  │    │                  │       │    │  DISPLAY UNIT    │   │    │
  │    │                  │       │    └──────────────────┘   │    │
  │    └──────────────────┘       └──────────────────────────┘    │
  └──────────────────────────────────────────────────────────────┘
                                    ↕                      72
  ┌────────────────┐    ┌──────────────────────────────────────────┐
  │ 76             │    │  DATA PROCESSING UNIT                     │
  │ COMMUNICATION  │    │             90                   95       │
  │     UNIT       │    │  ┌──────────────┐    ┌──────────────────┐ │
  │         110    │    │  │  MOVEMENT    │    │    DISPLAY       │ │
  │  ┌──────────┐  │    │  │CONTROLLING   │    │CONTROLLING UNIT  │ │
  │  │RECEIVING │  │    │  │    UNIT      │    │                  │ │
  │  │  UNIT    │  │    │  └──────────────┘    └──────────────────┘ │
  │  └──────────┘  │ ↔  │             92                   96       │
  │         112    │    │  ┌──────────────┐    ┌──────────────────┐ │
  │  ┌──────────┐  │    │  │  IMAGING     │    │    TOOL          │ │
  │  │TRANSMIT- │  │    │  │PROCESSING UNIT│   │ MANAGING UNIT    │ │
  │  │TING UNIT │  │    │  └──────────────┘    └──────────────────┘ │
  │  └──────────┘  │    │             94                   98       │
  └────────────────┘    │  ┌──────────────┐    ┌──────────────────┐ │
                        │  │   SHAPE      │    │  DETERMINATION   │ │
                        │  │REPRODUCING   │    │PROCESSING UNIT   │ │
                        │  │    UNIT      │    │                  │ │
                        │  └──────────────┘    └──────────────────┘ │
                        └──────────────────────────────────────────┘
                                    ↕                      74
  ┌──────────────────────────────────────────────────────────────┐
  │   DATA STORAGE UNIT                                            │
  │             100                          102                  │
  │    ┌──────────────────┐       ┌──────────────────────────┐    │
  │    │ TOOL INFORMATION │       │   SHAPE DATA             │    │
  │    │  STORAGE UNIT    │       │  STORAGE UNIT            │    │
  │    └──────────────────┘       └──────────────────────────┘    │
  └──────────────────────────────────────────────────────────────┘

                                      IMAGE PROCESSING DEVICE
```

<u>14</u>

FIG.7

FIG.8

EP 4 541 508 A1

FIG.9A

FIG.9B

FIG.9C

FIG.10A

FIG.10B

FIG.10C

FIG.11

FIG.12A

R

FIG.12D

R

FIG.12B

R

FIG.12E

R

FIG.12C

R

**FIG.13A** P

**FIG.13B** P

FIG.14

```
                    ┌─────────────────┐
                    │      START      │
                    └────────┬────────┘
                             │
S10    ┌─────────────────────────────────────────┐
       │       PROHIBIT TOOL REPLACEMENT          │
       └─────────────────────────────────────────┘
                             │
S12    ┌─────────────────────────────────────────┐
       │      START MOVING LIGHT SOURCE           │
       │        TOWARD TOOL BLADE EDGE            │
       └─────────────────────────────────────────┘
                             │
S14    ┌─────────────────────────────────────────┐
       │             START IMAGING               │
       └─────────────────────────────────────────┘
                             │◄──────────────────┐
S16              ◇                               │
            ◇   MOVEMENT    ◇        N           │
            ◇ STOP POSITION? ◇──────────────────┘
                 ◇       ◇
                     │ Y
S18    ┌─────────────────────────────────────────┐
       │        STOP MOVING LIGHT SOURCE         │
       └─────────────────────────────────────────┘
                             │
S20    ┌─────────────────────────────────────────┐
       │             STOP IMAGING                │
       └─────────────────────────────────────────┘
                             │
S22    ┌─────────────────────────────────────────┐
       │        PERMIT TOOL REPLACEMENT           │
       └─────────────────────────────────────────┘
                             │
S24    ┌─────────────────────────────────────────┐
       │         COMBINE TAKEN IMAGES             │
       └─────────────────────────────────────────┘
                             │
S26    ┌─────────────────────────────────────────┐
       │           GENERATE TOOL                  │
       │            SHAPE DATA                    │
       └─────────────────────────────────────────┘
                             │
S28    ┌─────────────────────────────────────────┐
       │        STORE PRE-USE TOOL                │
       │            SHAPE DATA                    │
       └─────────────────────────────────────────┘
                             │
                    ┌────────┴────────┐
                    │       END       │
                    └─────────────────┘
```

FIG.15

```
                    ┌─────────────────┐
                    │      START      │
                    └─────────────────┘
                             │
        ┌──────────────────────────────────────┐
   S30  │ START MOVING LIGHT SOURCE            │
        │ TOWARD TOOL BASE END                 │
        └──────────────────────────────────────┘
                             │
        ┌──────────────────────────────────────┐
   S32  │           START IMAGING              │
        └──────────────────────────────────────┘
                             │
                             ▼◄─────────────────┐
   S34         ◇                                │
            STANDBY POSITION?            N ──────┘
                    │ Y
        ┌──────────────────────────────────────┐
   S36  │      STOP MOVING LIGHT SOURCE        │
        └──────────────────────────────────────┘
                             │
        ┌──────────────────────────────────────┐
   S38  │           STOP IMAGING               │
        └──────────────────────────────────────┘
                             │
        ┌──────────────────────────────────────┐
   S40  │       COMBINE TAKEN IMAGES           │
        └──────────────────────────────────────┘
                             │
        ┌──────────────────────────────────────┐
   S42  │         GENERATE TOOL                │
        │         SHAPE DATA                   │
        └──────────────────────────────────────┘
                             │
        ┌──────────────────────────────────────┐
   S44  │      STORE POST-USE TOOL             │
        │         SHAPE DATA                   │
        └──────────────────────────────────────┘
                             │
        ┌──────────────────────────────────────┐
   S46  │        READ PRE-USE TOOL             │
        │         SHAPE DATA                   │
        └──────────────────────────────────────┘
                             │
        ┌──────────────────────────────────────┐
   S48  │       COMPARE TOOL SHAPES            │
        └──────────────────────────────────────┘
                             │
   S50   N         ◇
          ◄─── FAULTY TOOL?
                    │ Y
        ┌──────────────────────────────────────┐
   S52  │            INFORM                    │
        └──────────────────────────────────────┘
                             │
                    ┌─────────────────┐
                    │      END        │
                    └─────────────────┘
```

FIG.16A

Pr

Tx

Laser

→

FIG.16B

Pr1  Pr2

ΔL

Tx

LED  →  LED

FIG.17

EP 4 541 508 A1

FIG.18

FIG.19

EP 4 541 508 A1

$XO_m$

$m(T_1+T_2)-T_2$

$XO_m$

m-th imaging

$(m-1)(T_1+T_2)$

$(m-1)(T_1+T_2)-T_2$

$XC_{m-1}$

$XC_{m-1}$

$XO_2$  $XC_2$

$XO_2$  $XC_2$

$XC_1$

$XC_1$

Second imaging

$T_1+T_2$

$T_1$

$T_2$

$T_1$

First imaging

$XO_1$

$XO_1$

X

y

54

1  2  3   n-1  n

O

x

$L_1$  $L_2$  $L_{n-1}$

$$\sum_{k=0}^{n-1} L_k$$

FIG.20

FIG.21

| 1. Image Acquisition | 2. Preprocess | 3. Contour Extraction | 4. Analyzation |

**1. Image Acquisition**

Tool profile images

With laser unit moving

Background image

**2. Preprocess**

+noise removal with
background subtraction

**3. Contour Extraction**

Composition

Binarization

Contour Extraction

+high speed processing

**4. Analyzation**

Tip position

+Tip position detection
for breakage detecting

diameter each
vertical line

+Tool diameter calculation
for chip winding detecting

EP 4 541 508 A1

FIG.22

FIG.23A

FIG.23B

FIG.24A

FIG.24B

## Diameter comparison each vertical line

Before

(p1)

After    **Chip winding**

(p2)

After - before

(p2-p1)

## Image comparison

Before

After    **Slant of tool**

After - before

## INTERNATIONAL SEARCH REPORT

| International application No. |
|---|
| **PCT/JP2023/018908** |

**A. CLASSIFICATION OF SUBJECT MATTER**

***B23Q 17/24***(2006.01)i; ***B23Q 3/155***(2006.01)i; ***B23Q 17/09***(2006.01)i
FI:   B23Q17/24 Z; B23Q3/155 E; B23Q17/09 C

According to International Patent Classification (IPC) or to both national classification and IPC

**B. FIELDS SEARCHED**

Minimum documentation searched (classification system followed by classification symbols)

B23Q17/24; B23Q3/155; B23Q17/09

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6991375 B1 (DMG MORI SEIKI CO LTD) 12 January 2022 (2022-01-12) | 2-4 |
|   | paragraphs [0012]-[0065], [0069]-[0070], fig. 1-6, 10B, 12 |  |
| A |  | 1, 5-7 |
| Y | JP 2021-162475 A (PIONEER ELECTRONIC CORP) 11 October 2021 (2021-10-11) | 2-4 |
|   | paragraphs [0013]-[0038], fig. 1 |  |
| A | JP 2015-131357 A (MITSUBISHI HEAVY IND LTD) 23 July 2015 (2015-07-23) | 1-2, 6-7 |
| A | WO 2017/017825 A1 (MAKINO MILLING MACHINE) 02 February 2017 (2017-02-02) | 1-2, 6-7 |
| A | WO 2013/007655 A1 (MARPOSS SOCIETA' PER AZIONI) 17 January 2013 (2013-01-17) | 1-2, 6-7 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 July 2023** | **25 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/018908** |

| Patent document cited in search report | | | Publication date (day/month/year) | Patent family member(s) | | | Publication date (day/month/year) |
| --- | --- | --- | --- | --- | --- | --- | --- |
| JP | 6991375 | B1 | 12 January 2022 | JP | 2022-123918 | A | |
| | | | | paragraphs [0012]-[0065], [0069]-[0070], fig. 1-6, 10B, 12 | | | |
| JP | 2021-162475 | A | 11 October 2021 | (Family: none) | | | |
| JP | 2015-131357 | A | 23 July 2015 | WO | 2015/104945 | A1 | |
| WO | 2017/017825 | A1 | 02 February 2017 | US | 2018/0222002 | A1 | |
| | | | | EP | 3330043 | A1 | |
| | | | | CN | 107708921 | A | |
| WO | 2013/007655 | A1 | 17 January 2013 | CN | 103687696 | A | |
| | | | | KR | 10-2014-0061399 | A | |

Form PCT/ISA/210 (patent family annex) (January 2015)

**EP 4 541 508 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015131357 A
- JP 6991375 B
- JP 2022095929 A